(19) Europäisches Patentamt
European Patent Office
Office européen des brevets

(11) **EP 3 910 615 B1**

(12) **EUROPEAN PATENT SPECIFICATION**

(45) Date of publication and mention
of the grant of the patent:
**07.08.2024 Bulletin 2024/32**

(21) Application number: **19908197.7**

(22) Date of filing: **23.12.2019**

(51) International Patent Classification (IPC):
**H04L 9/08** (2006.01)   **G09C 1/00** (2006.01)
**G06N 3/04** (2023.01)   **G06N 3/08** (2023.01)
**H04L 67/50** (2022.01)   **H04L 9/40** (2022.01)
**G06N 3/045** (2023.01)

(52) Cooperative Patent Classification (CPC):
**H04L 9/0825; G06N 3/045; G06N 3/08; G09C 1/00;
H04L 63/0421; H04L 63/0428; H04L 67/535;**
H04L 2209/46

(86) International application number:
**PCT/JP2019/050376**

(87) International publication number:
**WO 2020/145113 (16.07.2020 Gazette 2020/29)**

(54) **PREDICTION MODEL CONVERSION METHOD AND SYSTEM**

VERFAHREN UND SYSTEM ZUR UMWANDLUNG VON VORHERSAGEMODELLEN

PROCÉDÉ ET SYSTÈME DE CONVERSION DE MODÈLE DE PRÉDICTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2019 JP 2019003238**

(43) Date of publication of application:
**17.11.2021 Bulletin 2021/46**

(73) Proprietor: **Panasonic Intellectual Property
Corporation
of America
Torrance, CA 90504 (US)**

(72) Inventors:
• **NISHIDA, Naohisa**
**Chou-ku, Osaka-shi,
Osaka 540-6207 (JP)**
• **OBA, Tatsumi**
**Chuo-ku, Osaka-shi,
Osaka 540-6207 (JP)**
• **UNAGAMI, Yuji**
**Chuo-ku, Osaka-shi,
Osaka 540-6207 (JP)**
• **TERUYA, Tadanori**
**2-3-26 Aomi, Koto-ku,
Tokyo 135-0064 (JP)**
• **ATTRAPADUNG, Nuttapong**
**2-3-26 Aomi, Koto-ku,
Tokyo 135-0064 (JP)**

(74) Representative: **Grünecker Patent- und
Rechtsanwälte
PartG mbB
Leopoldstraße 4
80802 München (DE)**

(56) References cited:
**JP-A- 2019 215 512**

• **JIANG LEI ET AL: "XNOR-POP: A
processing-in-memory architecture for binary
Convolutional Neural Networks in Wide-IO2
DRAMs", 2017 IEEE/ACM INTERNATIONAL
SYMPOSIUM ON LOW POWER ELECTRONICS
AND DESIGN (ISLPED), IEEE, 24 July 2017
(2017-07-24), pages 1 - 6, XP033142397, DOI:
10.1109/ISLPED.2017.8009163**
• **HIROMASA KITAI ET AL: "MOBIUS:
Model-Oblivious Binarized Neural Networks",
ARXIV.ORG, CORNELL UNIVERSITY LIBRARY,
201 OLIN LIBRARY CORNELL UNIVERSITY
ITHACA, NY 14853, 29 November 2018
(2018-11-29), XP081597383, DOI:
10.1109/ACCESS.2019.2939410**

- **COURBARIAUX MATTHIEU ET AL: "BinaryNet: Training Deep Neural Networks with Weights and Activations Constrained to +1 or 1", 9 February 2016 (2016-02-09), XP055851858, Retrieved from the Internet <URL:https://arxiv.org/pdf/1602.02830v1.pdf> [retrieved on 20211015]**
- **NISHIDA, NAOHISA; OBA, TATSUMI; KATO, RYO; UNAGAMI, YUJI; YAMADA, SHOTA; ATTRAPADUNG, NUTTAPONG; TERUYA, TADANORI; MATSUDA, TAKIHI: "Private Machine Learning Classification Based on Binarized Neural Networks", IPSJ SYMPOSIUM SERIES, vol. 2017, 16 October 2017 (2017-10-16), pages 592 - 599, XP009522378, ISSN: 1882-0840**
- **KITAI, HIROMASA ET AL.: "MOBIUS: Model-Oblivious Binarized Neural Networks", ARXIV, 29 November 2018 (2018-11-29), pages 5 - 6, XP081597383, Retrieved from the Internet <URL:https://arxiv.org/pdf/1811.12028v1> [retrieved on 20200122]**

**Description**

[Technical Field]

The present disclosure relates to a prediction model conversion method and a prediction model conversion system for performing prediction processing of a neural network while keeping content secret.

[Background Art]

In recent years, various companies have been providing services that use neural networks. For example, a service that identifies types of subjects from uploaded images, or a service that predicts a user's preferences and recommends products based on the user's purchase history, can be given as examples.

Because such services use personal information such as images or purchase histories, it is necessary to protect the user's private information. There is also demand for a system that can provide a service to users without allowing third parties to know information related to the knowledge of the service provider.

For example, NPL 1 (SecureML), NPL 2 (CryptoNets), and NPL 3 (MOBIUS) disclose techniques for prediction processing while keeping data secret.

[Citation List]

[Non Patent Literature]

[NPL 1]
Payman Mohassel et al, "SecureML: A System for Scalable Privacy-Preserving Machine Learning", IEEE Symposium on Security and Privacy 2017 (https://eprint.iacr.org/2017/396.pdf)
[NPL 2]
Ran Gilad-Bachrach et al, "CryptoNets: Applying Neural Networks to Encrypted Data with High Throughput and Accuracy" (http://proceedings.mlr.press/v48/gilad-bachrach16.pdf)
[NPL 3]
Hiromasa Kitai et al, "MOBIUS: Model-Oblivious Binarized Neural Networks" (https://arxiv.org/abs/1811.12028)

[Summary of Invention]

[Technical Problem]

However, NPL 1 (SecureML) has a problem in that the prediction accuracy is significantly lower than a typical neural network. Additionally, NPL 2 (CryptoNets) and NPL 3 (MOBIUS) have problems in that the amount of computation is extremely high and the prediction accuracy is low.

JIANG LEI ET AL, "XNOR-POP: A processing-in-memory architecture for binary Convolutional Neural Networks in Wide-IO2 DRAMs", 2017 IEEE/ACM INTERNATIONAL SYMPOSIUM ON LOW POWER ELECTRONICS AND DESIGN (ISLPED), IEEE, DOI: 10.1109/ISLPED.2017.8009163, relates to convolutional neuronal networks. Normalization and activation are combined into a sign function.

Kitai et al, "MOBIUS: Model-Oblivious Binarized Neural Networks", DOI: 10.1109/ACCESS.2019.2939410 discloses generating an encrypting model called MOBIUS.

Accordingly, the present disclosure provides a prediction model conversion method and a prediction model conversion system that improve the efficiency of prediction processing. Furthermore, by employing the above-described configuration, the present disclosure reduces the amount of computation, which improves the processing speed and reduces a drop in the prediction accuracy.

[Solution to Problem]

To solve the above-described problems, one aspect of a prediction model conversion method includes: converting a prediction model by converting a plurality of parameters which are included in the prediction model and are for performing homogenization processing into at least one parameter for performing processing including nonlinear processing, the prediction model being a neural network; and generating an encrypted prediction model that performs prediction processing with input in a secret state remaining secret by encrypting the prediction model that has been converted.

Additionally, to solve the above-described problems, one aspect of a prediction model conversion system includes: a prediction model converter that converts a prediction model by converting a plurality of parameters which are included in the prediction model and are for performing homogenization processing into at least one parameter for performing processing including nonlinear processing, the prediction model being a neural network; and a prediction model encryptor that generates an encrypted prediction model that performs prediction processing with input in a secret state remaining secret by encrypting the prediction model that has been converted.

[Advantageous Effects of Invention]

According to the prediction model conversion method and prediction model conversion system of the present disclosure, the speed of prediction processing, which can be executed while keeping input secret, can be improved, and a drop in prediction accuracy can be reduced.

[Brief Description of Drawings]

[FIG. 1]

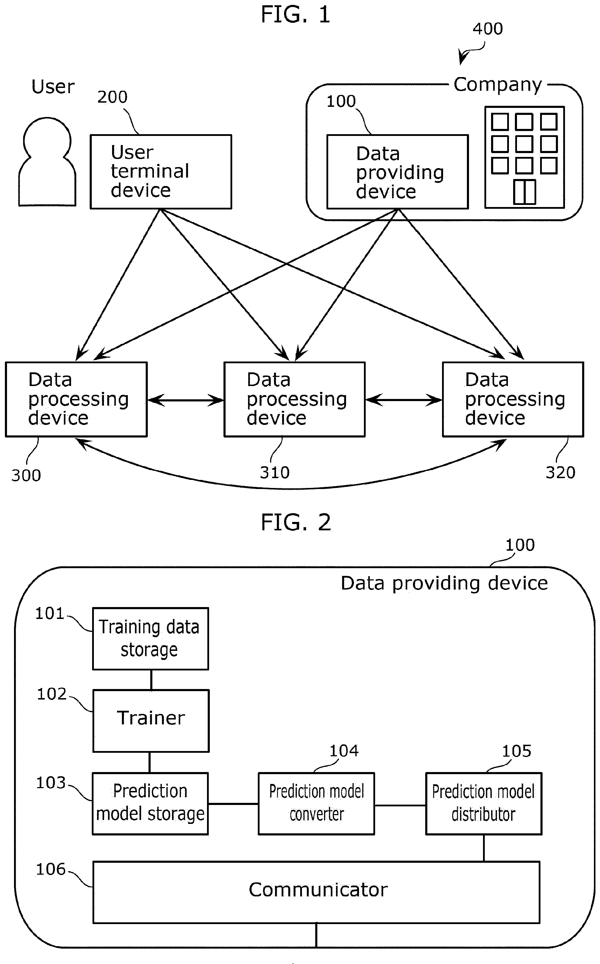

FIG. 1 is a diagram illustrating an example of the overall configuration of a prediction model conversion system according to an embodiment.
[FIG. 2]
FIG. 2 is a diagram illustrating an example of the configuration of a data providing device according to the embodiment.
[FIG. 3]

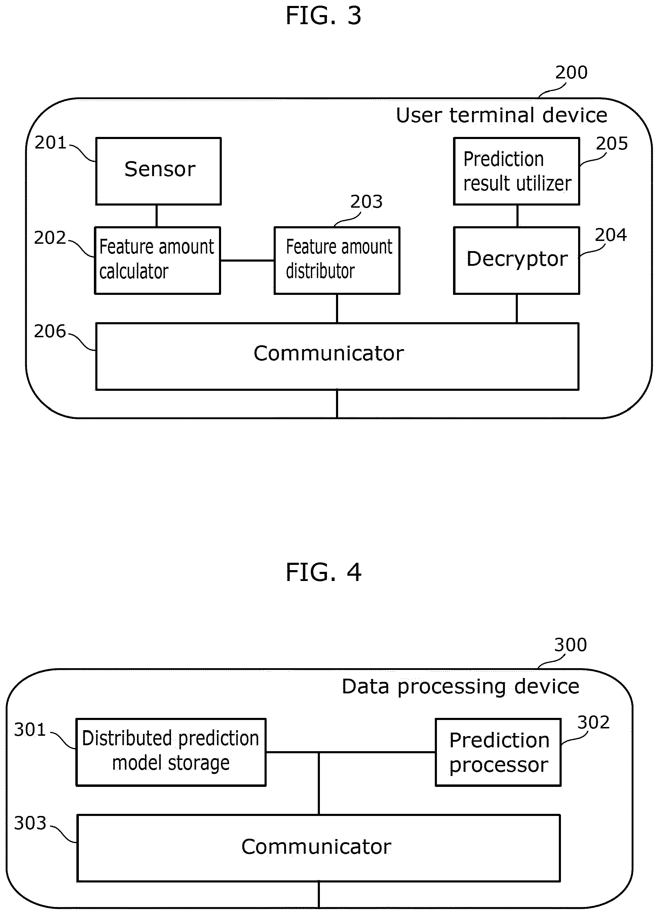

FIG. 3 is a diagram illustrating an example of the configuration of a user terminal device according to the embodiment.
[FIG. 4]
FIG. 4 is a diagram illustrating an example of the configuration of a data processing device according to the embodiment.
[FIG. 5]

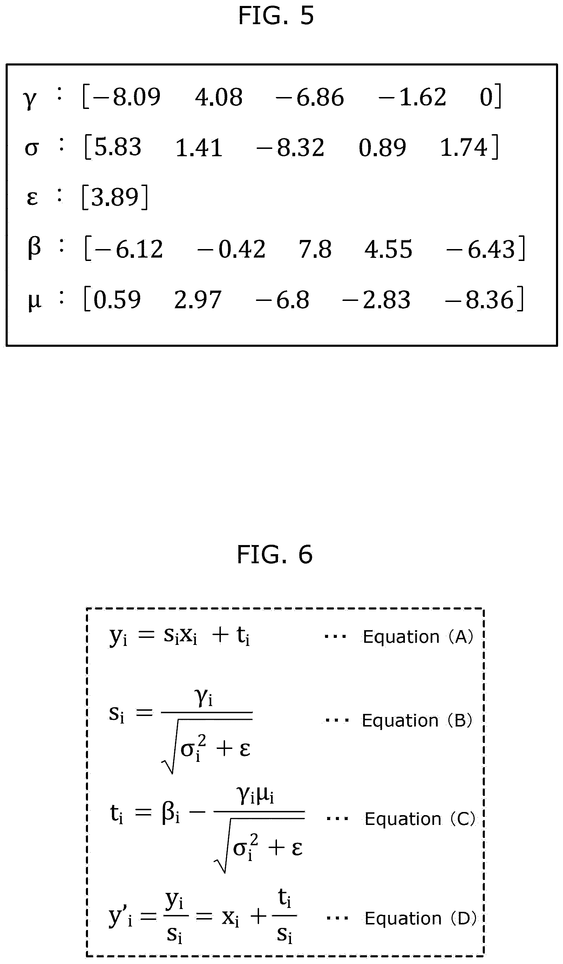

FIG. 5 is a diagram illustrating an example of homogenization parameters included in a prediction model according to the embodiment.
[FIG. 6]
FIG. 6 is a diagram illustrating an example of homogenization processing in prediction processing according to the embodiment.
[FIG. 7]

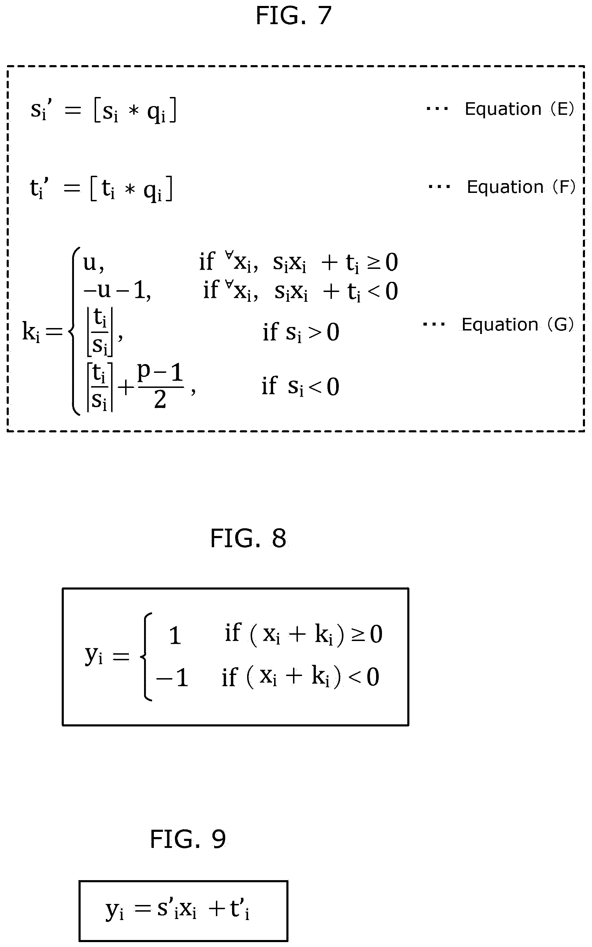

FIG. 7 is a diagram illustrating an equation for generating new parameters from parameters of the homogenization processing according to the embodiment.
[FIG. 8]
FIG. 8 is a diagram illustrating an example of homogenization + nonlinear processing according to the embodiment.
[FIG. 9]
FIG. 9 is a diagram illustrating an example of homogenization processing according to the embodiment.
[FIG. 10A]

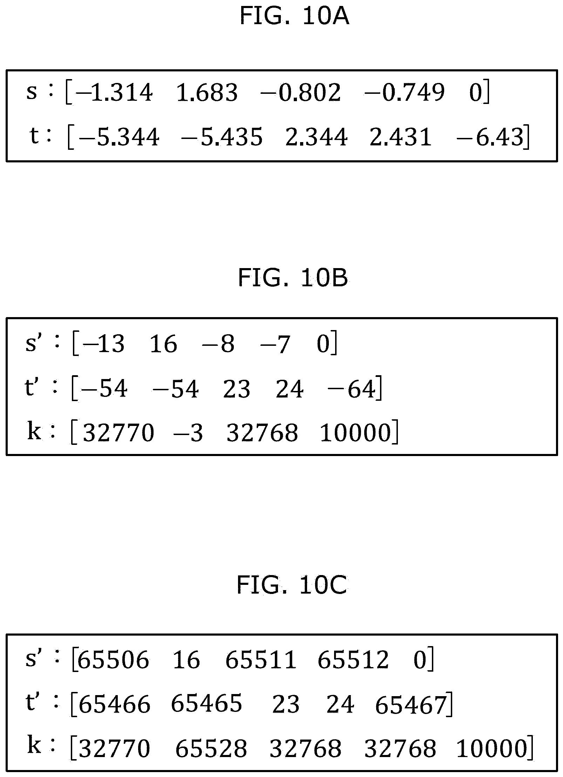

FIG. 10A is a diagram illustrating an example of a prediction model after advance computation according to the embodiment.
[FIG. 10B]
FIG. 10B is a diagram illustrating an example of a prediction model after conversion according to the embodiment.
[FIG. 10C]
FIG. 10C is a diagram illustrating an example of a prediction model in which a negative integer has been converted to a positive integer according to the embodiment.
[FIG. 11]

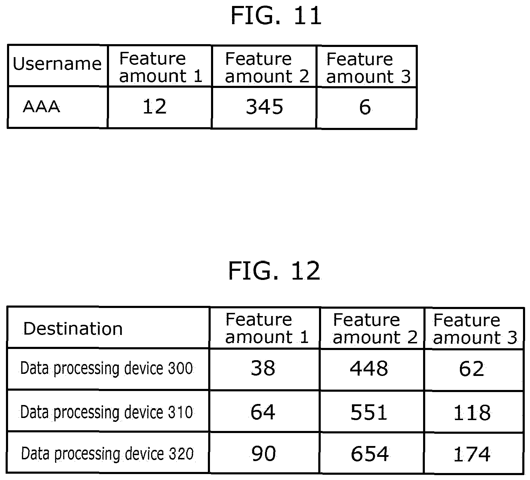

FIG. 11 is a diagram illustrating an example of a feature amount according to the embodiment.
[FIG. 12]
FIG. 12 is a diagram illustrating an example of a distributed feature amount according to the embodiment.
[FIG. 13]

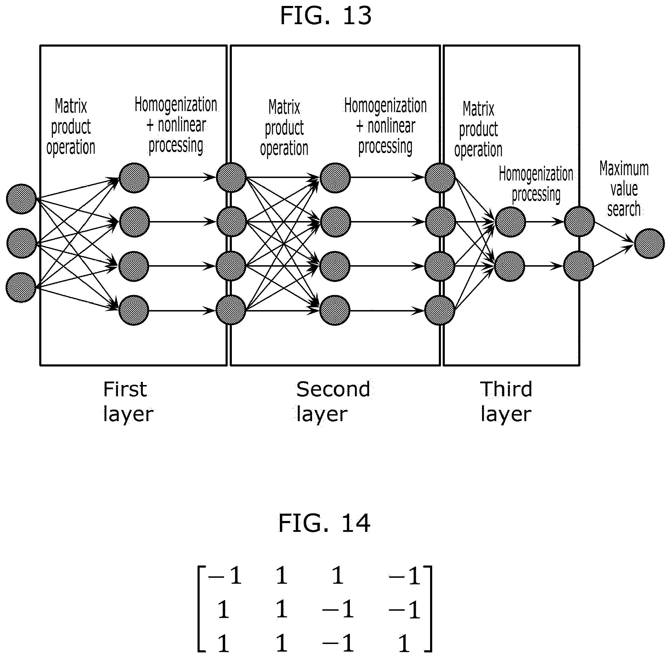

FIG. 13 is a diagram illustrating an overview of the flow of prediction processing according to the embodiment.
[FIG. 14]

FIG. 14 is a diagram illustrating an example of a weighting matrix according to the embodiment.
[FIG. 15]

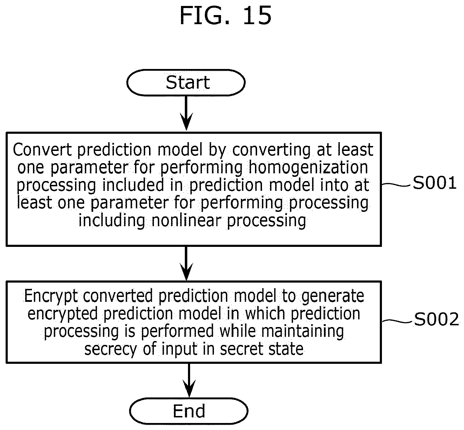

FIG. 15 is a flowchart illustrating an example of a prediction model conversion method according to the embodiment.
[FIG. 16A]

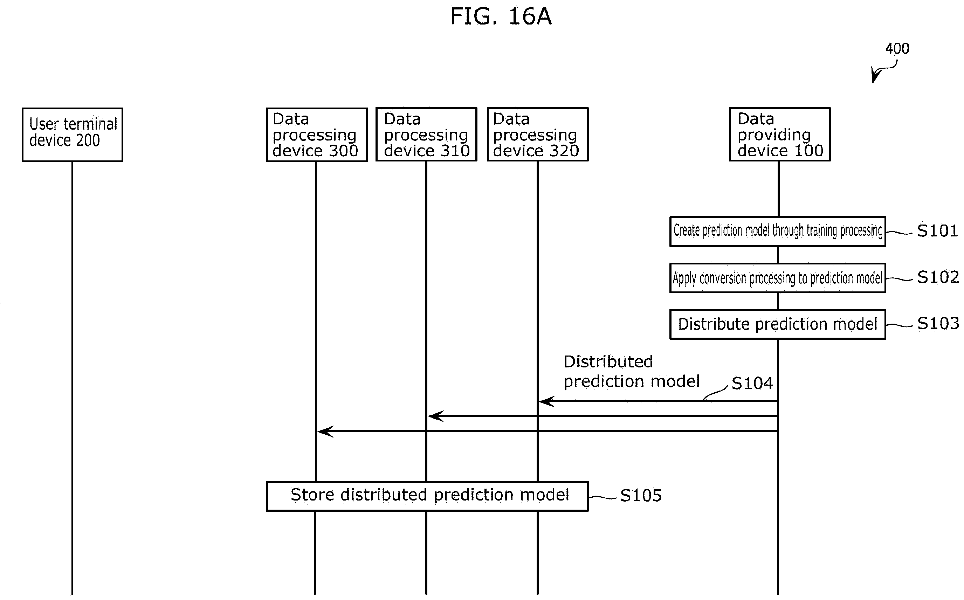

FIG. 16A is a sequence chart illustrating operations in a training phase of the prediction model conversion system according to the embodiment.
[FIG. 16B]

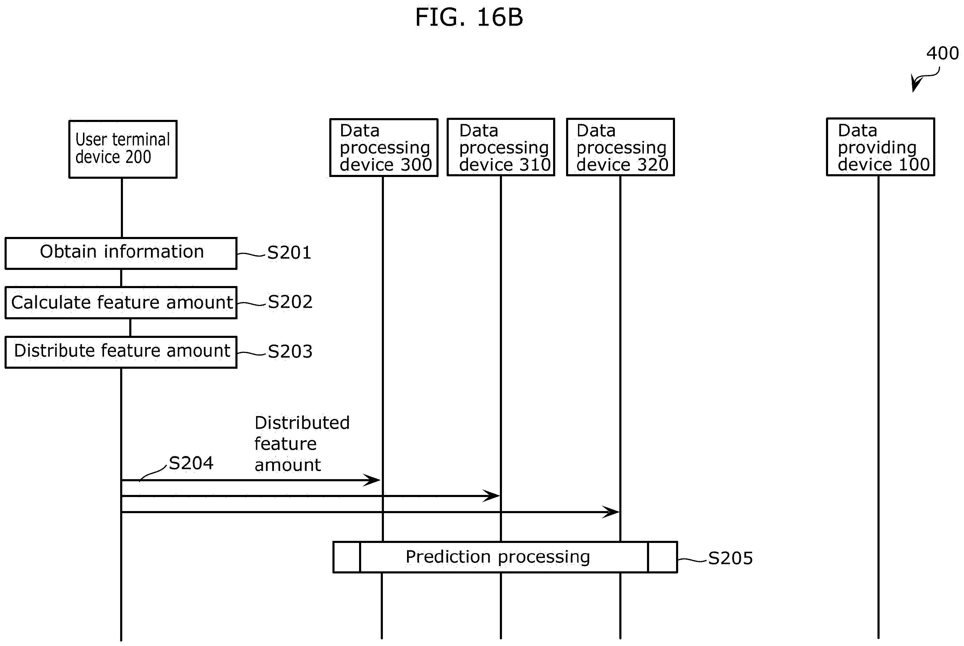

FIG. 16B is a first sequence chart illustrating operations in a prediction phase of the prediction model conversion system according to the embodiment.
[FIG. 16C]

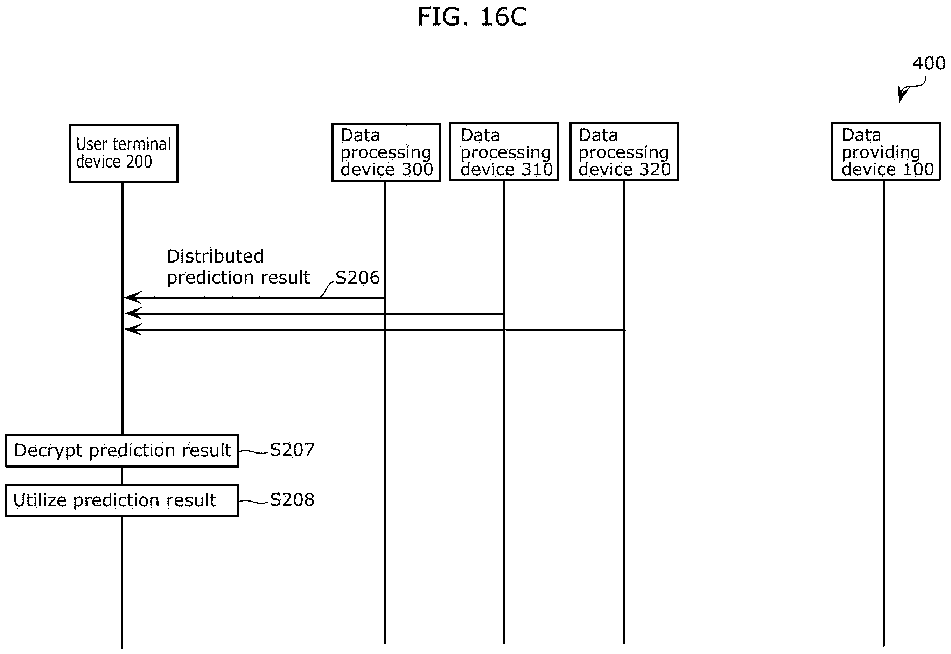

FIG. 16C is a second sequence chart illustrating operations in a prediction phase of the prediction model conversion system according to the embodiment.
[FIG. 16D]

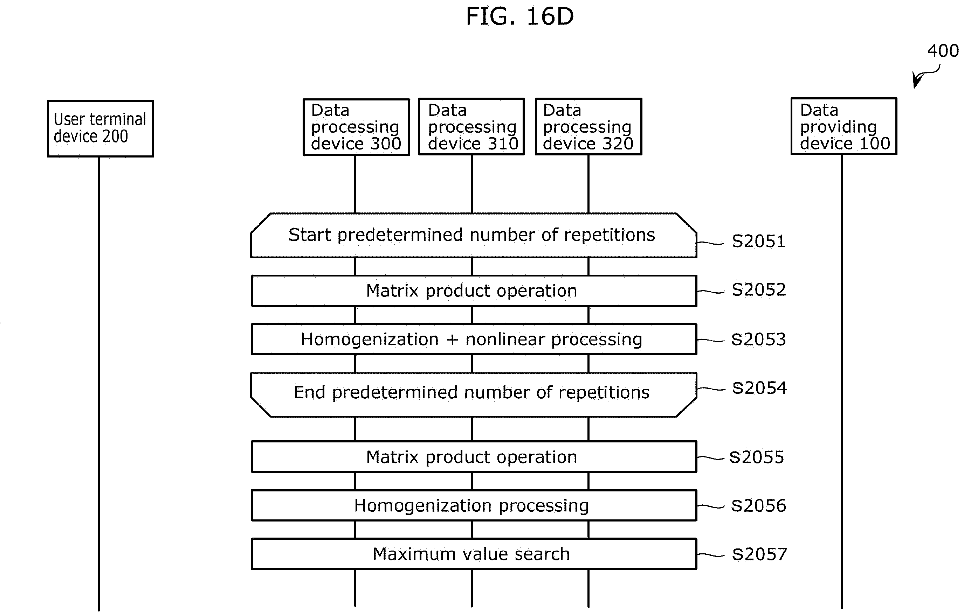

FIG. 16D is a sequence chart illustrating an example of step S205 in FIG. 16B.
[FIG. 17]

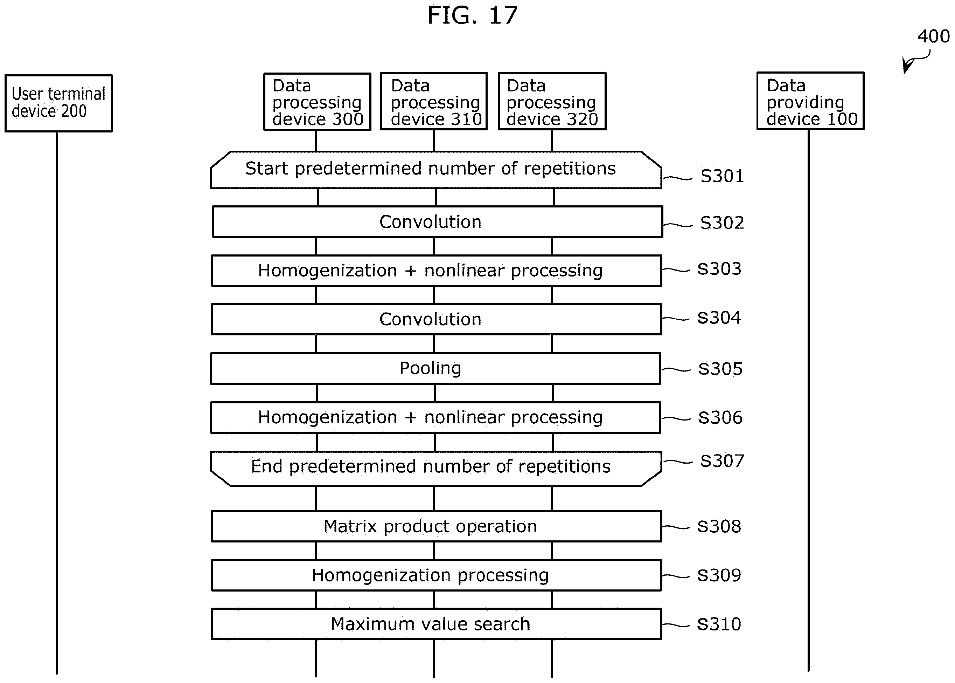

FIG. 17 is a diagram illustrating a variation on the prediction processing according to the embodiment.
[FIG. 18]

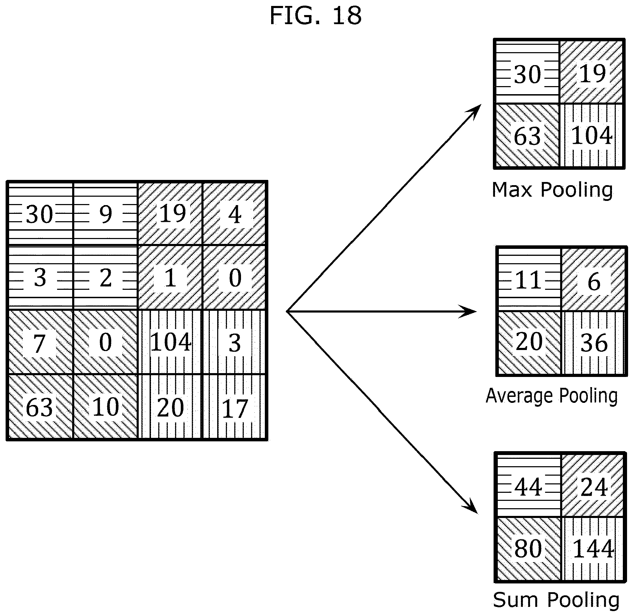

FIG. 18 is a diagram illustrating an example of pooling processing according to the embodiment.

[Description of Embodiments]

Underlying Knowledge Forming Basis of the Present Disclosure

In recent years, various companies have been providing services that use neural networks. Services which identify the type of subjects from uploaded images, services that recommend products that a user may like based on the user's purchase history, or services that predict a user's physical state or mental state based on the user's biometric information (e.g., pulse, blood sugar level, body temperature, or the like) and providing feedback to the user can be given as examples of services that use neural networks.

With such services, the input information from the user, e.g., input information such as images uploaded by the user, the user's purchase history or biometric information, or the like, often contains sensitive information, and it is therefore necessary to protect the user's private information. There is thus a need for technology to perform the training processing and prediction processing of neural networks which enables users to use services without disclosing their private information to service providers.

From the service providers' standpoint as well, there is demand for a system that can provide a service to users without allowing users and third parties aside from users to know information related to the knowledge involved with the service.

As a technique that satisfies these two conditions, for example, a method of performing prediction processing of a neural network using a method called secure computation, which makes it possible to perform computations while keeping data secret, is conceivable. Secure computation is a technique that makes it possible to keep the computation process and results secret from the entity that stores the data. For example, data can be stored on a server managed by a third party, such as in the cloud, and any operation can be executed on the stored data. Because no third party can know the input data, computation process, or computation results, analysis processing of sensitive information, such as personal information, can be outsourced.

For example, NPL 1 (SecureML), NPL 2 (CryptoNets), and NPL 3 (MOBIUS) disclose techniques for prediction processing while keeping data secret.

However, the practicality of the methods described in these documents is questionable, due to the reduced prediction accuracy and the huge amount of computation.

After diligently examining the foregoing issue, the inventors found new parameters for processing including homogenization processing and nonlinear processing, by converting the parameters for homogenization processing in prediction processing. The inventors then found that by using the new parameters, a single layer can execute processing that includes both the homogenization processing and the nonlinear processing in a neural network.

Accordingly, the present disclosure provides a prediction model conversion method and a prediction model conversion system capable of improving the speed of prediction processing, which can be executed while keeping input secret, and reducing a drop in prediction accuracy.

One aspect of the present disclosure is as follows.

A prediction model conversion method according to one aspect of the present disclosure includes: converting a prediction model by converting a plurality of parameters which are included in the prediction model and are for performing homogenization processing into at least one parameter for performing processing including nonlinear processing, the prediction model being a neural network; and generating an encrypted prediction model that performs prediction processing with input in a secret state remaining secret by encrypting the prediction model that has been converted.

In this manner, by converting the plurality of parameters for performing the homogenization processing into at least one parameter for performing processing including the nonlinear processing, the processing related to the homogenization processing and the nonlinear processing can be performed through simpler processing. As a result, the number of times the processing is performed is reduced, which makes it possible to reduce the amount of computation in the prediction processing. Additionally, reducing the number of times the processing is performed makes it possible to reduce the occurrence of computation error, which in turn makes it possible to reduce a drop in prediction accuracy.

For example, in the prediction model conversion method according to one aspect of the present disclosure, the at least one parameter for performing the processing including the nonlinear processing may be one parameter, and in the converting, the plurality of parameters for performing the homogenization processing may be converted into one parameter for performing the processing including the nonlinear processing.

Through this, the equations used for the processing including the nonlinear processing can be made into simple equations. As a result, the amount of computation in the prediction processing is reduced, and the speed of the prediction processing is improved.

For example, in the prediction model conversion method according to one aspect of the present disclosure, the homogenization processing may be processing performed by an equation $y_i = s_i x_i + t_i$, where $x_i$ is an input and $y_i$ is an output, $s_i$ and $t_i$ may be the plurality of parameters for performing the homogenization processing, the processing including the nonlinear processing may be processing performed by Equation (1), and $k_i$ may be the at least one parameter for performing the processing including the nonlinear processing, and may be determined using $s_i$ and $t_i$.

[Math 1]

$$y_i = \begin{cases} 1 & \text{if } (x_i + k_i) \geq 0 \\ -1 & \text{if } (x_i + k_i) < 0 \end{cases}$$

$$\dots \text{Equation (1)}$$

Through this, the output after the nonlinear processing can be obtained by inputting the input $x_i$ of the homogenization processing into the aforementioned Equation (1). As a result, the amount of computation in the prediction processing is reduced, and the speed of the prediction processing is improved.

For example, in the prediction model conversion method according to one aspect of the present disclosure, $k_i$ may be expressed by Equation (2).

[Math 2]

$$k_i = \begin{cases} u, & \text{if } ^{\forall}x_i, \ s_i x_i + t_i \geq 0 \\ -u-1, & \text{if } ^{\forall}x_i, \ s_i x_i + t_i < 0 \\ \left\lceil \left| \dfrac{t_i}{s_i} \right| \right\rceil, & \text{if } s_i > 0 \\ \left\lceil \left| \dfrac{t_i}{s_i} \right| \right\rceil + \dfrac{p-1}{2}, & \text{if } s_i < 0 \end{cases}$$

$$\dots \text{Equation (2)}$$

Here, u is a theoretical maximum value during computation of the prediction processing, and p is a divisor used in the encrypting.

Through this, an appropriate value can be obtained for the parameter $k_i$, even if the value of $s_i$ is too large or too small.

For example, in the prediction model conversion method according to one aspect of the present disclosure, in the generating: the prediction model may be encrypted by distributing, through a secret sharing method, the prediction model that has been converted, and in the distributing of the prediction model, the at least one parameter for performing the processing including the nonlinear processing may be distributed.

Through this, the prediction model can be kept secret, and the prediction processing can be performed safely. To apply the secret sharing method, integerization processing such as dropping numbers below the decimal point in the prediction model is required, which increases the possibility of computation errors and reduces the prediction accuracy.

However, by converting the parameters of the homogenization processing to the parameters of the processing including the nonlinear processing, the stated integerization processing is no longer necessary, and computation errors can be eliminated even when the secret sharing method is used. This reduces the amount of computation and improves the accuracy of the prediction processing, and furthermore reduces a drop in the prediction accuracy.

For example, the prediction model conversion method according to one aspect of the present disclosure may further include determining a divisor used in the secret sharing method in a range greater than a possible value of an element of the prediction model.

In the secret sharing method, using a large numerical value as the divisor (i.e., modulus p) increases the amount of computation, and thus determining the optimal divisor makes it possible to perform the prediction processing with a minimum amount of computation.

For example, in the prediction model conversion method according to one aspect of the present disclosure, the prediction model may be a binarized neural network including a plurality of parameters each having a binary value of -1 or 1.

In this manner, using a binarized neural network as the prediction model makes it possible to shorten the computation time for the matrix product operation. Additionally, because the prediction model is a binarized neural network, the process of converting negative numerical values in the prediction model to positive numerical value is simplified. This makes it possible to reduce a drop in the speed of the prediction processing.

For example, the prediction model conversion method according to one aspect of the present disclosure may further include training the prediction model using training data collected in advance, and a parameter obtained through the prediction processing as the at least one parameter for performing the homogenization processing may be converted in the converting.

Through this, it is easier to create a prediction model suitable for deriving the correct prediction results. The prediction accuracy can therefore be improved.

For example, in the prediction model conversion method according to one aspect of the present disclosure, in the converting, the divisor used in the secret sharing method may be added to a negative numerical value in a plurality of parameters included in the prediction model to convert the negative numerical value to a positive numerical value.

In general, the prediction accuracy increases as the numerical value of a parameter increases, and the speed of the computations increases as the numerical value decreases. Therefore, for example, from the perspective of balancing prediction accuracy with prediction speed, the value of the divisor used in the secret sharing method is determined and added to the negative numerical value. Accordingly, when the converted prediction model is used, a drop in both the prediction accuracy and the prediction speed can be reduced. Furthermore, because all the parameters in the converted prediction model are represented by positive numerical values, the converted prediction model can be distributed through the secret sharing method. The prediction processing can therefore be performed while keeping the input secret.

For example, in the prediction model conversion method according to one aspect of the present disclosure, in the converting, a negative numerical value is converted to a positive numerical value by converting a value in a plurality of parameters included in the prediction model to a set including a sign part indicating a sign of the numerical value as 0 or 1 and a numerical value part indicating an absolute value of the numerical value.

In this conversion processing, when, for example, one of the parameters in the prediction model is -10, -10 is converted into a pair (1,10) with a sign part indicating the sign and a numerical value part indicating the absolute value of the numerical value. As such, because the negative number -10 is converted into a pair of negative numerical values 1 and 10, the parameters in the prediction model are expressed only by positive numerical values. Accordingly, applying the conversion processing to the prediction model makes it possible to distribute the converted prediction model using the secret sharing method.

For example, the prediction model conversion method according to one aspect of the present disclosure may further include: calculating a feature amount from data obtained by sensing; and distributing, through the secret sharing method, the feature amount that has been calculated.

Through this, sensitive information, such as personal information obtained from the user through sensing, can be distributed through the secret sharing method, in the same manner as the prediction model. Thus with the prediction model conversion method according to one aspect of the present disclosure, the input for the prediction processing (here, user information) can be kept secret, i.e., the prediction processing can be performed while protecting the user's private information.

For example, the prediction model conversion method according to one aspect of the present disclosure may further include: executing prediction processing by the prediction model that has been distributed, by inputting, to the prediction model that has been distributed, the feature amount that has been distributed, wherein the executing includes the nonlinear processing, and the nonlinear processing is processing of converting an input to the nonlinear processing into 1 when the input is 0 or a numerical value corresponding to a positive, and into a positive numerical value corresponding to -1 when the input is a numerical value corresponding to a negative.

7

Through this, the numerical value of the input can be converted so that the converted numerical value falls within a positive numerical value range that guarantees the accuracy of the prediction. This makes it possible to reduce a drop in the speed and the prediction accuracy of the prediction processing.

Note that the following embodiments describe specific examples of the present disclosure. The numerical values, shapes, constituent elements, steps, orders of steps, and the like in the following embodiments are merely examples, and are not intended to limit the present disclosure. Additionally, of the constituent elements in the following embodiments, constituent elements not denoted in the independent claims, which express the broadest interpretation, will be described as optional constituent elements. Additionally, the drawings are not necessarily exact illustrations. Configurations that are substantially the same are given the same reference signs in the drawings, and redundant descriptions may be omitted or simplified.

Additionally, variations on the embodiments conceived by one skilled in the art, other embodiments implemented by combining constituent elements from parts of each embodiment in all of the embodiments, fall within the scope of the present disclosure.

[Embodiment]

A prediction model conversion method and a prediction model conversion system according to the present embodiment will be described below with reference to the drawings.

1. Overview of Prediction Model Conversion System

First, an overview of the prediction model conversion system will be given. FIG. 1 is a diagram illustrating an example of the overall configuration of prediction model conversion system 400 according to the embodiment.

Prediction model conversion system 400 according to the present embodiment is a prediction model conversion system for performing prediction processing while keeping input secret. More specifically, the prediction model conversion system is a system that uses an encrypted prediction model ("distributed prediction model" hereinafter) and user information encrypted using the same method as the distributed prediction model ("distributed feature amount" hereinafter) to perform prediction processing while maintaining the encryption. In other words, the stated input is encrypted data input to a neural network that executes the prediction processing (here, data processing devices 300, 310, and 320). Note that the prediction model is data necessary for the prediction processing, including parameters, a weighting matrix, and the like used in the prediction processing.

The prediction model conversion system will also be referred to as a "secret prediction system". Distribution and encryption will also be referred to below as "concealing".

1.1 Configuration of Prediction Model Conversion System

The configuration of prediction model conversion system 400 according to the present embodiment will be described next with reference to FIGS. 1 to 4. FIG. 2 is a diagram illustrating an example of the configuration of data providing device 100 according to the embodiment. FIG. 3 is a diagram illustrating an example of the configuration of user terminal device 200 according to the embodiment. FIG. 4 is a diagram illustrating an example of the configuration of data processing device 300 according to the embodiment.

As illustrated in FIG. 1, prediction model conversion system 400 includes, for example, data providing device 100, user terminal device 200, and two or more (here, three) data processing devices 300, 310, and 320. Communication between the devices may be a wired Internet line, wireless communication, dedicated communication, or the like. Note that data processing devices 300, 310, and 320 may each be a single cloud server or a device included in a single cloud server.

Although the present embodiment describes prediction model conversion system 400 illustrated in FIG. 1 as an example, the embodiment is not limited thereto. Prediction model conversion system 400 may be a system including at least the following constituent elements.

For example, prediction model conversion system 400 may include: prediction model converter 104 that converts a prediction model, which is a neural network, by converting a plurality of parameters included in the prediction model and being for performing homogenization processing into at least one parameter for performing processing including nonlinear processing; and a prediction model encryptor (e.g., prediction model distributor 105) that generates an encrypted prediction model that performs prediction processing with input in a secret state remaining secret by encrypting the prediction model that has been converted.

Note that prediction model distributor 105 is an example of a prediction model encryptor. For example, prediction model distributor 105 encrypts the prediction model by distributing, through a secret sharing method, the prediction model that has been converted.

Prediction model conversion system 400 may further include, for example, feature amount calculator 202 that calculates a feature amount from data obtained by sensing user information, and feature amount distributor 203 that distributes, through the secret sharing method, the feature amount that has been calculated.

Prediction model conversion system 400 may further include, for example, prediction processor 302 that executes prediction processing by the prediction model that has been distributed by inputting, to the prediction model that has been distributed, the feature amount that has been distributed.

In prediction model conversion system 400, for example, a company or organization secretly sends data required for prediction processing ("prediction model" hereinafter) from data providing device 100 to three cloud servers, i.e., data processing devices 300, 310, and 320. When a user uses a service of the secret prediction system, the user secretly transmits their own information ("feature amount" hereinafter) from user terminal device 200 to the three cloud servers, i.e., data processing devices 300, 310, and 320. By communicating with each other, the three cloud servers compute prediction results while keeping the data secret, with each cloud server using data obtained by the other cloud servers. Each of the three data processing devices 300, 310, and 320 then transmits the obtained prediction results to user terminal device 200. User terminal device 200 decrypts the prediction results received from the three data processing devices 300, 310, and 320.

Note that there may be at least one data providing device 100, and there may be at least one user terminal device 200 as well. Furthermore, although prediction model conversion system 400 includes the three data processing devices 300, 310, and 320 in the example illustrated in FIG. 1, it is sufficient for the system to include at least two data processing devices. The reason for this will be described in detail later. Note that the secret sharing method used in the present embodiment cannot decrypt an original value unless at least two of the pieces of distributed data are collected. As such, each piece of distributed data is subjected to the prediction processing while remaining in a secret state. The prediction result calculated from the prediction processing is also in a secret state, and thus at least two prediction results in a secret state are necessary in order to obtain a decrypted prediction result.

Note that the communication among the devices constituting prediction model conversion system 400 need not be real-time communication. For example, user terminal device 200 may collect a given number of pieces of user information from sensing or request commands for prediction processing performed while remaining in a secret state (also called simply "prediction processing" hereinafter) and then transmit those items to two or more of data processing devices 300, 310, and 320.

Each of the constituent elements of the prediction model conversion system according to the present embodiment will be described in detail hereinafter with reference to the drawings.

### 1.2 Data Providing Device

Data providing device 100 will be described hereinafter with reference to FIGS. 1 and 2.

As illustrated in FIG. 1, data providing device 100 is a device through which, for example, a company or an organization provides data required for prediction processing to data processing devices 300, 310, and 320 in a secret state.

As illustrated in FIG. 2, data providing device 100 includes training data storage 101, trainer 102, prediction model converter 104, prediction model distributor 105, communicator 106, and prediction model storage 103.

Data providing device 100 creates a prediction model by training a neural network using the knowledge held by the company, organization, or the like as training data. The knowledge held by the company or organization is, for example, data in which biometric information such as blood pressure, heartbeat, CT scan information, or the like is associated with medical cases corresponding to that biometric information. Data providing device 100 creates the prediction model by training, for example, a binarized neural network (BNN) using that training data. Then, by distributing the created prediction model through a secret sharing method, data providing device 100 transmits the prediction model to the plurality of data processing devices 300, 310, and 320 in a secret state.

The various constituent elements of data providing device 100 will be described next.

### 1.2.1 Training Data Storage

Training data storage 101 stores the training data for creating the prediction model required to perform prediction processing while keeping the input secret. The training data is a set including data having the same nature as a feature amount calculated by feature amount calculator 202 of user terminal device 200 (see FIG. 3) and correct answer data corresponding to the data having the same nature as the feature amount. In the present embodiment, the training data is, for example, a set including feature amounts calculated from vital data pertaining to a plurality of patients, and disease names for each of the patients, serving as correct answer data corresponding to the feature amounts.

### 1.2.2 Trainer

Trainer 102 is, for example, a BNN, and creates the prediction model by performing training processing through a predetermined method using the training data stored in training data storage 101. For example, the method described in NPL 4 (Matthieu Courbariaux et al, "Binarized Neural Networks: Training Deep Neural Networks with Weights and Activations Constrained to +1 or -1" (https://arxiv.org/abs/1602.02830)) is used for the training processing. FIG. 5 is a diagram illustrating an example of the prediction model according to the present embodiment. The prediction model will be described later and will therefore not be mentioned here.

### 1.2.3 Prediction Model Storage

Prediction model storage 103 stores the prediction model created by trainer 102.

### 1.2.4 Prediction Model Converter

Prediction model converter 104 converts the prediction model obtained through the training processing by trainer 102. Here, prediction model converter 104 performs conversion processing on the prediction model stored in prediction model storage 103. Note that the prediction model includes, for example, parameters, equations, weighting matrices, and the like used in the prediction processing. The prediction processing is executed by prediction processor 302 of each of data processing devices 300, 310, and 320. In the present embodiment, prediction processor 302 is a BNN. The prediction model will be described in detail hereinafter with reference to the drawings.

FIG. 6 is a diagram illustrating an example of homogenization processing in prediction processing according to the present embodiment. (Equation A) in FIG. 6 is an equation indicating an example of the homogenization processing in the prediction processing by the BNN. The homogenization processing is processing performed by Equation (A) $y_i = s_i x_i + t_i$, where the parameters $s_i$ and $t_i$ are parameters for performing the homogenization processing. In Equation (A), $x_i$ represents an input vector of the homogenization processing (also called simply the "input" hereinafter), and $y_i$ represents an output vector of the homogenization process (also called simply the "output" hereinafter).

$\gamma$, $\sigma$, $\varepsilon$, $\beta$, and $\mu$ in Equation (B) and (Equation C) are trained parameter vectors in the prediction model of FIG. 5. As such, because the five trained parameters mentioned above are fixed values, the parameters $s_i$ and $t_i$ in Equation (B) and Equation (C) can be computed before the prediction processing.

In the prediction processing, the nonlinear processing is always executed immediately after the homogenization processing. As such, the input data of the nonlinear processing is the output data of the homogenization processing. The positive or negative sign of the input data (i.e., the output data of the homogenization processing) is determined in the nonlinear processing. In other words, the nonlinear processing can be substituted by processing which returns a value that has the same positive and negative signs as the output of the homogenization processing (Equation (D1) and Equation (D2) below). For example, by dividing both sides of Equation (A) in FIG. 6 by $s_i$, the expression $y'_i = x_i + t_i/s_i$, which is a variant of Equation (D) in FIG. 6, can be derived. However, if only this is done, the signs of $y_i$ and $y'_i$ may be different depending on the sign of the parameter $s_i$. Accordingly, the substitution can be performed with Equation (D1), i.e., $y'_i = x_i + t_i$, when the sign of the parameter $s_i$ is positive, and the substitution can be performed with Equation (D2), i.e., $y'_i = x_i + t_i + p/2$, using modulus $p$ of secure computation, when the sign of the parameter $s_i$ is negative. Additionally, through this alone, if $s_i$ is a decimal between 0 and 1 and $t_i$ is a large numerical value, the value of $t_i/s_i$ will be high. In the secret sharing method, a sufficiently high number is set as modulus $p$ so that the value during the computation or the value of the parameter to be distributed secretly does not exceed modulus $p$. However, as modulus $p$ is set to a higher value, the amount of computation increases. Therefore, when $t_i/s_i$ becomes large, it is necessary to use a high value as modulus $p$, which increases the amount of computation.

Here, if the range of values of the input data in the prediction processing is set, the theoretical maximum of the values during the computation in the prediction processing can be computed in advance based on the range of values of the input data and the trained parameters. FIG. 7 is a diagram illustrating an equation for generating new parameters from parameters of the homogenization processing according to the embodiment. In the present embodiment, the aforementioned maximum value is set to $u$, and the new parameter $k_i$ is computed using equation (G) in FIG. 7, which makes it possible to use the equation $y'_i = x_i + k_i$ instead of the homogenization processing (this will be called "new homogenization processing").

Note that $k_i$ is a parameter for performing the processing including the nonlinear processing, and is determined using $s_i$ and $t_i$. Additionally, in Equation (G) in FIG. 7, $u$ is a theoretical maximum value during the computation of the prediction processing, and $p$ is a divisor used in the encrypting.

With the prediction processing according to the present embodiment, the processing associated with the new homogenization processing and the nonlinear processing can be executed using simpler processing. This simple processing is processing including nonlinear processing (called "homogenization + nonlinear processing" hereinafter), and is processing performed using the equation illustrated in FIG. 8. FIG. 8 is a diagram illustrating an example of the homogenization + nonlinear processing according to the embodiment. As illustrated in FIG. 8, in the homogenization + nonlinear processing, if the equation $y'_i = x_i + k_i$ of the new homogenization processing is at least 0, the output $y_i$ is 1, whereas if the equation $y'_i = x_i + k_i$ is less than 0, the output $y_i$ is -1. Thus in the homogenization + nonlinear processing according to the present embodiment, at least one of the parameters for performing the processing including the nonlinear processing is a single parameter (the aforementioned $k_i$), and the simple processing can be executed using the equation illustrated in FIG. 8.

As described above, the prediction model converter converts the plurality of parameters for performing the homogenization processing into one parameter for performing the homogenization + nonlinear processing.

Additionally, prediction model converter 104 may perform the computations of Equation (A), Equation (B), and Equation (C) illustrated in FIG. 6 in advance, and take the result as a new prediction model. Performing the computations of Equation (A), Equation (B), and Equation (C) illustrated in FIG. 6 in advance will be called "advance computation" hereinafter.

By computing the Equations which can be computed in advance before the encryption and taking the result as the new prediction model, the amount of computation and amount of communication of data processing devices 300, 310, and 320 can be reduced, which makes it possible to reduce a drop in the prediction accuracy.

As described above, the secret sharing method cannot handle decimals. As such, when prediction model distributor 105 distributes a prediction model through the secret sharing method, decimals cannot be handled. Accordingly, as illustrated in FIGS. 10A and 10B, prediction model converter 104 multiplies new prediction models s and t, created by performing the computations of Equation (A), Equation (B), and Equation (C) illustrated in FIG. 6 in advance, by a predetermined numerical value (e.g., 10) and dropping numbers below the decimal point to integerize the new prediction models s and t (integerized parameters s' and t' in FIG. 10B).

As described above, the secret sharing method cannot handle negative numerical values (i.e., negative integers). As such, when prediction model distributor 105 distributes a prediction model through the secret sharing method, negative numerical values cannot be handled. Accordingly, prediction model converter 104 may add the divisor (i.e., modulus p) used in the secret sharing method to a negative numerical value in a plurality of parameters included in the prediction model in order to convert the negative numerical value to a positive numerical value. For example, as illustrated in FIGS. 10B and 10C, prediction model converter 104 creates a converted prediction model by converting elements expressed by negative numerical values, in the integerized prediction models s' and t', into positive numerical values. For example, when a given element x is a negative numerical value, the element x is converted to p + x with respect to modulus p used in the distribution processing. Note that prediction model converter 104 may further determine the divisor (modulus p) to be used in the secret sharing method in a range greater than a possible value of the elements of the prediction model. Note that modulus p may be close to a power of two, and may be as small as possible.

The advance computation of the prediction model will be described in detail hereinafter with reference to FIGS. 10A to 10C.

FIG. 10A is a diagram illustrating an example of the prediction model after advance computation according to the present embodiment. FIG. 10A illustrates the parameter s and the parameter t, which are calculated by substituting the five parameters $\gamma$, $\sigma$, $\varepsilon$, $\beta$, and $\mu$ indicated in FIG. 5 into Equation (A) and Equation (B) in FIG. 6.

FIG. 10B is a diagram illustrating an example of the prediction model after conversion according to the present embodiment. Although the parameters s and t illustrated in FIG. 10A are values which include decimals, the secret sharing method cannot handle decimals. Thus as indicated by Equation (E) and Equation (F) in FIG. 7, the parameters s and t illustrated in FIG. 10A are integerized (the integerized parameter s' and parameter t' in FIG. 10B) by multiplying the parameters s and t by a given constant q (q = 10 in FIG. 10B) and dropping numbers below the decimal point. At the same time, the new parameter k illustrated in FIG. 10B is generated by using the parameters s and t to perform the computation of (Equation G) in FIG. 7. Note that as illustrated in FIG. 10B, the integerized parameter s' and parameter t' contain negative numerical values. As described above, negative numerical values cannot be handled when distributing a prediction model through the secret sharing method, and it is therefore necessary to convert negative numerical values into positive numerical values. Specifically, negative numerical values are converted to positive numerical values by adding the divisor p used in the secret sharing method (the aforementioned modulus p) to the negative numerical values. As illustrated in FIG. 10C, when, for example, p = 65519, the negative numerical values in the aforementioned parameters are converted to extremely high positive numerical values corresponding to the negative numerical values.

FIG. 10C is a diagram illustrating an example of the prediction model converted using a plurality of parameters, according to the present embodiment. As described above, by adding modulus p to the negative numerical values in the integerized prediction model, the parameters s', t', and k' illustrated in FIG. 10C are converted to extremely high positive numerical values corresponding to the negative numerical values. Note that in FIG. 10C, p = 65519.

1.2.5 Prediction Model Distributor

Prediction model distributor 105 is an example of a prediction model encryptor. Prediction model distributor 105 uses a predetermined method to distribute and make secret the converted prediction model created by prediction model converter 104. For example, prediction model distributor 105 encrypts the prediction model which has been converted (the so-called "converted prediction model") by distributing the prediction model using the secret sharing method, and when distributing the prediction model, distributes the parameters for performing the processing including the nonlinear processing (the so-called "homogenization + nonlinear processing").

Prediction model distributor 105 creates a prediction model (also called a "distributed prediction model" hereinafter) capable of performing prediction processing in data processing devices 300, 310, and 320 with the feature amount obtained from user terminal device 200 remaining encrypted (i.e., in a secret state). Prediction model distributor 105 creates the distributed prediction model by distributing the prediction model using, for example, the Shamir (2,3) threshold secret sharing method (NPL 5: Adi Shamir, "How to share a secret" (https://cs.jhu.edu/~sdoshi/crypto/papers/shamirturing.pdf)).

Note that as mentioned above, the secret sharing method is not limited to the method of NPL 5, and the method described in NPL 6 (Ronald Cramer et al,, "Share Conversion, Pseudorandom Secret-Sharing and Applications to Secure Computation" (https://rd.springer.com/chapter/10.1007/978-3-540-30576-7_19) ) or NPL 7 (Takahashi Nishide et al, "Multiparty Computation for Interval, Equality, and Comparison Without Bit-Decomposition Protocol", "Public Key Cryptography - PKC 2007", Springer Berlin Heidelberg (https://rd.springer.com/chapter/10.1007/978-3-540-71677-8_23) ) may be used instead.

The upper bound of the value during the computation in the prediction processing (e.g., the maximum value u) can be computed from the range of values of the input data and the trained parameters. It is necessary that modulus p used in the distribution processing be set so that the value during computation does not exceed p, and thus the upper bound of the value during the computation of the prediction processing (i.e., the maximum value u) is cmoputed in advance, with numbers greater than or equal to that value being determined as modulus p and held in prediction model distributor 105.

1.2.6 Communicator

Communicator 106 communicates with data processing devices 300, 310, and 320. Communicator 106 transmits the distributed prediction model created by prediction model distributor 105 (the so-called "encrypted prediction model") to the plurality of data processing devices 300, 310, and 320.

1.3 User Terminal Device

FIG. 3 is a diagram illustrating an example of the configuration of user terminal device 200. User terminal device 200 includes sensor 201, feature amount calculator 202, feature amount distributor 203, decryptor 204, prediction result utilizer 205, and communicator 206. User terminal device 200 is implemented in a computer or mobile terminal including, for example, a processor (microprocessor), memory, sensors, a communication interface, and the like.

User terminal device 200 senses information pertaining to a user, such as the user's blood pressure, heartbeat, CT scan information, or the like, i.e., private data, calculates a feature amount, and transmits the feature amount to data processing devices 300, 310, and 320. At this time, user terminal device 200 distributes the feature amount through the secret sharing method, for example, to transmit the feature amount to data processing devices 300, 310, and 320 in a secret state. Then, user terminal device 200 requests prediction results corresponding to the calculated feature amount from data processing devices 300, 310, and 320, obtains the prediction results from data processing devices 300, 310, and 320, and uses a service in prediction model conversion system 400. At this time, user terminal device 200 obtains encrypted prediction results from data processing devices 300, 310, and 320, and decrypts and uses the prediction results.

1.3.1 Sensor

Sensor 201 is configured including one or more measurement devices, which are sensors, for sensing information on the user (user information).

The user information to be sensed may be, for example, the user's vital data such as blood pressure, body temperature, heartbeat, or the like, image information such as a face image, ultrasound information, CT scan information, or the like obtained by capturing an image of, or measuring, the user's body.

Additionally, the user information to be sensed may be, for example, location information obtained by GPS (Global Positioning System), log information indicating a history of the user's operation of an electric device or a moving object such as a vehicle, the user's purchase history information for products and so on, or the like.

The log information may be various types of information obtained or measured in association with, for example, steering operations, acceleration operations, braking operations, operations for shifting gears, or the like in a vehicle, and may be, for example, information that associates a displacement amount, speed, acceleration, or the like to a time of operation.

The user information to be sensed may, for example, be private data, which is personal matters that the user does not want others to know.

Prediction model conversion system 400 is a prediction model conversion system for performing prediction processing of a BNN while keeping the user's private data secret, and is a secret prediction system that calculates a prediction result with the result remaining secret. Here, the descriptions assume that the information about the user sensed by sensor 201 is private data.

1.3.2 Feature Amount Calculator

Feature amount calculator 202 calculates a feature amount from the user's private data obtained by sensor 201. The feature amount calculated by feature amount calculator 202 can be expressed as a vector containing a plurality of components.

The feature amount includes, for example, a component expressing an indicator related to at least one of a shape, size, weight, condition, and movement of the whole or a part of the user's body.

Note that the part of the user's body that is the subject of the feature amount can be any part of the body, such as the eyes, nose, ears, hands, feet, organs, blood vessels, or the like.

A physical state, and more specifically, the state of the user with respect to various items used in health checkups, the amount of water in the body, blood pressure, oxygen saturation level, or the like can be given as the state of the whole or part of the user's body.

Body motion (i.e., body movement), and more specifically, the number of times the user turns over in bed per unit time, vibrations such as shaking of limbs or facial twitching, microvibrations such as heart rate, breathing rate, or inhalation/exhalation ratio can be given as examples of the movement of the whole or a part of the user's body.

Note that when the private data is a face image of the user, the feature amount is the primary component of the characteristic parameters in the face image, for example. The feature amount may be, for example, information such as the position, area, width, or the like of a given region of the user's face image. Additionally, the feature amount may, for example, be information expressed by vectors that include, as components (e.g., coefficients of each term when expressed as a polynomial expression), a trend in some element measured for the user by sensor 201, corresponding to the time axis, from history information indicating that element.

Note that the feature amount extracted from the user information obtained by sensor 201 can itself be private data. FIG. 11 is a diagram illustrating an example of a feature amount according to the present embodiment.

1.3.3 Feature Amount Distributor

Feature amount distributor 203 distributes and makes secret the feature amount calculated by feature amount calculator 202, through a predetermined method. Feature amount distributor 203 creates a feature amount that has been distributed (also called a "distributed feature amount" hereinafter) by distributing the feature amount using a method in which data processing devices 300, 310, and 320 can perform prediction processing using the feature amount still in a distributed state (i.e., still in a secret state), e.g., the Shamir (2,3) threshold secret sharing method (NPL 5).

The secret sharing method is a technique for generating a plurality of pieces of distributed information from secret information. The distributed information is created in such a way that the secret information can be recovered from a predetermined combination, but not from other combinations. The predetermined combination can take on a variety of structures, and those structures are called "access structures". There are many different types of access structures. A threshold-type access structure will be described here as a typical access structure. The threshold-type access structure is expressed by two parameters, namely a number n of the pieces of distributed information to be generated, and a threshold m ($m \leq n$). The secret information can be recovered from at least m pieces of the distributed information, but not from fewer than m pieces of the distributed information. Secret sharing methods with a threshold-type access structure include, for example, the Shamir (2,3) threshold secret sharing method (NPL 5) mentioned above, which includes distribution processing for generating three pieces of distributed information with the secret information as input, and recovery processing for recovering the secret information from two or more pieces of the distributed information.

Note that the secret sharing method is not limited to the method described in NPL 5, and the method described in NPL 6 or NPL 7 may be used. Modulus p used in the distribution processing is determined in advance by the system and held by feature amount distributor 203. FIG. 12 is a diagram illustrating an example of the distributed feature amount according to the present embodiment.

1.3.4 Decryptor

Decryptor 204 receives the prediction results corresponding to the feature amounts transmitted by user terminal device 200 and distributed to data processing devices 300, 310, and 320 from data processing devices 300, 310, and 320 and decrypts the prediction results. These prediction results are results obtained using the feature amount and prediction model distributed using the secret sharing method while remaining in a distributed state, and are so-called "encrypted prediction results". The method described in any one of NPL 5, NPL 6, and NPL 7, for example, may be used as the method for decrypting the prediction results.

1.3.5 Prediction Result Utilizer

Prediction result utilizer 205 uses the prediction results decrypted by decryptor 204. One example of the utilization of the prediction results is presenting the prediction results to the user, i.e., the presentation of the prediction results. The prediction results may be presented as an image or as audio, for example. When the prediction results are presented as an image, the presentation is, for example, in the form of a graph, statistical information, or the like based on the prediction results. When the prediction results are presented as audio, the presentation is done by, for example, outputting audio based on the prediction results. Note that the prediction results may be presented as both an image and as audio. In this case, user terminal device 200 may be provided with, for example, a display that displays images, an audio output device such as a speaker that outputs audio, and other types of user interfaces, and the prediction results may be presented.

Additionally, prediction result utilizer 205 may further perform predetermined operations, information searches, or the like based on the prediction results and present the user with guidance for receiving a medical checkup at a hospital, advice for improving lifestyle habits, a recommended program, or the like.

1.3.6 Communicator

Communicator 206 communicates with the plurality of data processing devices 300, 310, and 320. Communicator 206 transmits, to data processing devices 300, 310, and 320, the feature amounts created and distributed by feature amount distributor 203. As described in detail below in the section "1.4 Data Processing Devices", the plurality of data processing devices 300, 310, and 320 execute the prediction processing upon receiving these distributed feature amounts, using the distributed feature amounts which remain in a secret state. Additionally, communicator 106 receives the prediction results computed by data processing devices 300, 310, and 320 and transmits those prediction results to decryptor 204. As described above, these prediction results are encrypted prediction results.

1.4 Data Processing Devices

The data processing devices will be described next. As illustrated in FIG. 1, data processing devices 300, 310, and 320 are cloud servers, for example. In prediction model conversion system 400, it is sufficient for at least two data processing devices 300 to be provided. In the present embodiment, the three data processing devices 300, 310, and 320 communicate with each other to compute the prediction results with the data remaining secret, and send the encrypted prediction results to user terminal device 200. More specifically, data processing devices 300, 310, and 320 input the distributed feature amounts to the distributed prediction models and execute prediction processing using the distributed prediction models. Data processing devices 300, 310, and 320 according to the present embodiment will be described in further detail hereinafter.

FIG. 4 is a diagram illustrating an example of the configuration of data processing device 300. Data processing device 300 includes distributed prediction model storage 301, prediction processor 302, and communicator 303. Data processing device 300 performs the prediction processing using the distributed feature amount received from user terminal device 200 and the distributed prediction model received from data providing device 100, with those items remaining in a distributed state. Note that data processing devices 310 and 320 have the same configuration as data processing device 300.

1.4.1 Distributed Prediction Model Storage

Distributed prediction model storage 301 stores the prediction model which is distributed, received from data providing device 100 (the so-called "distributed prediction model").

1.4.2 Prediction Processor

Prediction processor 302 performs the prediction processing using the distributed prediction model stored in distributed prediction model storage 301 and the distributed feature amount received from user terminal device 200. Prediction processor 302 performs the prediction processing using the distributed prediction model and the distributed feature amount still in a distributed state (i.e., still in a secret state), and finds a distributed prediction result. Note that the distributed prediction result is an encrypted prediction result.

The prediction processing will be described in detail next with reference to the drawings. FIG. 13 is a diagram illustrating an example of the flow of prediction processing according to the present embodiment.

Prediction processor 302 inputs the distributed feature amount to the distributed prediction model and executes the prediction processing using the distributed prediction model. The prediction processing includes nonlinear processing. The prediction processing is executed through four types of processing: matrix product operation, data distribution homogenization + nonlinear processing, homogenization processing, and maximum value search. In past prediction processing, the data distribution homogenization processing and nonlinear processing are executed separately, but in the prediction processing according to the present embodiment, prediction model converter 104 generates the new parameter k, which enables the homogenization processing and the nonlinear processing to be performed through the simple equation illustrated in FIG. 8 (i.e., performed through simpler processing). More specifically, in the present embodiment, the nonlinear processing is processing of converting an input for the nonlinear processing into 1 when the input is 0 or a numerical value corresponding to a positive, and into a positive numerical value corresponding to -1 when the input is a numerical value corresponding to a negative. This makes it possible to reduce the amount of computation compared to a case where the homogenization processing and the nonlinear processing are executed separately. Additionally, when performing the homogenization processing in the equation indicated in FIG. 9, numbers below the decimal point are dropped during the process of computing s' and t', which produces computation error and reduces the final prediction processing accuracy. On the other hand, by performing the computation using the equation illustrated in FIG. 8, the prediction processing can be performed without computation error, i.e., without any drop in accuracy.

In the prediction processing, the matrix product operation and data distribution homogenization + nonlinear processing are executed for a predetermined number of repetitions, and the maximum value search is then performed to obtain the prediction result (i.e., the distributed prediction result). Note that the flow of the prediction processing illustrated in FIG. 13 is an example, and the flow is not limited thereto.

Each process in the prediction processing will be described below with reference to the drawings.

The matrix product operation will be described first. The matrix product operation computes a matrix product of the distributed feature amount, which is a distributed input vector, and a distributed weighting matrix included in the distributed prediction model. The distributed weighting matrix and the distributed feature amount will be described below.

FIG. 14 is a diagram illustrating an example of a weighting matrix before conversion, according to the present embodiment. As illustrated in FIG. 14, the prediction model (here, the weighting matrix before conversion) is a binarized neural network (BNN) containing a plurality of parameters constituted by binary values of -1 or 1. Although not illustrated here, a converted prediction model (a converted weighting matrix) is created by converting the negative numerical values among the parameters included in the prediction model illustrated in FIG. 14 into positive numerical values through the method described with reference to FIGS. 10B and 10C, for example. In the present embodiment, the distributed prediction model used in the matrix product operation (i.e., the distributed weighting matrix) is an encrypted prediction model obtained by encrypting the converted prediction model through distribution using the secret sharing method.

The distributed feature amount will be described next. Like the prediction model, the distributed feature amount is an encrypted feature amount obtained by using the secret sharing method to distribute the feature amount calculated from the data obtained from the sensing (also called "sensing data" hereinafter). For example, referring to FIGS. 11 and 12, the sensing data of user AAA is feature amount 1, feature amount 2, and feature amount 3, and these feature amounts are distributed to data processing devices 300, 310, and 320, respectively, through the secret sharing method. For example, to describe the distribution of feature amount 1, the distributed feature amounts of feature amount 1 illustrated in FIG. 12 correspond to three encrypted feature amounts obtained by distributing feature amount 1 through the secret sharing method.

The homogenization processing and nonlinear processing of the data distribution obtained from the matrix product operation will be described next. The equation illustrated in FIG. 8 is used in the homogenization + nonlinear processing according to the present embodiment. In FIG. 8, $x_i$ is the input vector, which is the vector calculated through the matrix product operation described above. The vector $k_i$ is a parameter generated by prediction model converter 104. $y_i$ is the output vector, and is a vector calculated through the homogenization + nonlinear processing. In the homogenization + nonlinear processing, after computing the sum of the input vector $x_i$ and the parameter $k_i$, when the resulting value is 0 or a number corresponding to a positive, the resulting value is converted to a numerical value corresponding to 1, whereas when the resulting value is a number corresponding to a negative, the resulting value is converted to a number corresponding to -1.

The numerical value corresponding to a positive, expressed using modulus p, for example, may be from 0 to (p-1)/2, and the numerical value corresponding to a negative may be from (p+1)/2 to p-1. Note that which of the values from 0 to p-1 are to be numerical values corresponding to a positive or numerical values corresponding to a negative may be determined as desired.

Additionally, for example, a value having a most significant bit of 0 may be set to a numerical value corresponding to a positive, and a value having a most significant bit of 1 may be set to a value corresponding to negative.

The maximum value search will be described next. In the maximum value search, the element having the maximum value among all the elements in the distributed input vector is searched out. The maximum value search is realized, for example, by comparing magnitude relationships among all elements of the input vector for the maximum value search, and computing a logical product of the comparison results. More specifically, in the maximum value search, the magnitude relationship for each element is compared to all the other elements individually. The comparison result is expressed as a binary value of 0 and 1. For example, if the value of a given element is the same as the value of another element or greater than the value of the other element, the comparison result is expressed as 1, and if the value of a given element is less than the value of another element, the comparison result is expressed as 0. The comparison results of the magnitude relationships between all elements the corresponding other elements are held in a comparison table. In this case, for the element having the maximum value among all the elements, the results of the comparisons of the magnitude relationships with the other elements will be all 1s. Accordingly, when the logical product of the comparison results is computed, the logical product will be 1 only for the element having the maximum value, and will be 0 for all other elements. Using this property makes it possible to extract the element having the maximum value.

As described above, the four types of processing in the present embodiment, namely the matrix product operation, the homogenization + nonlinear processing for the data distribution, the homogenization processing for the data distribution, and the maximum value search, can be constituted by only the sum, product, magnitude relationship comparison, and logical product for the inputs in each type of processing. For example, according to NPL 8 (Takahashi Nishide et al, "Multiparty Computation for Interval, Equality, and Comparison Without Bit-Decomposition Protocol", "Public Key Cryptography - PKC 2007", Springer Berlin Heidelberg (https://rd.springer.com/chapter/10.1007/978-3-540-71677-8_23) ) the sum, product, magnitude relationship comparison, and logical product of two distributed values can be computed without being decrypted. As such, by using the method of NPL 8 in the prediction processing, the prediction processing can be performed while keeping the input secret, without decrypting the distributed prediction model and the distributed feature amount.

### 1.4.3 Communicator

Communicator 303 of data processing device 300 communicates with data providing device 100, user terminal device 200, and the other data processing devices 310 and 320. Communicator 303 receives the distributed prediction model from data providing device 100, and stores the received distributed prediction model in distributed prediction model storage 301. Communicator 303 receives the distributed feature amount from user terminal device 200, and transmits the received distributed feature amount to prediction processor 302. Additionally, communicator 303 transmits, to user terminal device 200, the distributed prediction result calculated by prediction processor 302.

As described above, data processing device 300 can perform the prediction processing without decrypting the distributed prediction model and the distributed feature amount, with those items remaining distributed, i.e., in a secret state.

### 2. Prediction Model Conversion Method

An example of a prediction model conversion method according to the present embodiment will be described next. FIG. 15 is a flowchart illustrating an example of a prediction model conversion method according to the present embodiment.

The prediction model conversion method includes: converting a prediction model by converting a plurality of parameters included in the prediction model and being for performing homogenization processing into at least one parameter for performing processing including nonlinear processing, the prediction model being a neural network (S001); and generating an encrypted prediction model that performs prediction processing with input in a secret state remaining secret by encrypting the prediction model that has been converted (S002).

An example of operations performed by the prediction model conversion system will be described hereinafter.

### 2.1 Operations of Prediction Model Conversion System (Prediction Model Conversion Method)

An example of operations performed by prediction model conversion system 400 will be described next. The operations of prediction model conversion system 400 include (i) a training phase of data providing device 100 training and distributing the prediction model, and (ii) a prediction phase of the plurality of data processing devices 300, 310, and 320 predicting the feature amounts that have been distributed (the so-called "distributed feature amounts") using the prediction model that has been distributed (the so-called "distributed prediction model").

2.1.1 Training Phase

Operations of prediction model conversion system 400 in the training phase will be described first. FIG. 16A is a sequence chart illustrating an example of operations in the training phase of prediction model conversion system 400 according to the present embodiment.

In training step S101, data providing device 100 (see FIG. 2) refers to the training data stored in training data storage 101, and using trainer 102, performs training processing of the prediction model, which is a binarized neural network (BNN).

The prediction model for performing the prediction processing is created as a result. The created prediction model is stored in prediction model storage 103.

Next, in prediction model conversion step S102, data providing device 100 uses prediction model converter 104 to apply conversion processing to the created prediction model. Specifically, in prediction model conversion step S102, data providing device 100 converts the parameters included in the prediction model of the neural network and used in the homogenization processing (the homogenization parameters $s_i$ and $t_i$ in FIG. 6) and creates the new parameter $k_i$ so that the homogenization processing and the nonlinear processing can be executed through the simple processing illustrated in FIG. 8, for example. More specifically, in prediction model conversion step S102, the homogenization parameters included in the prediction model are converted using the formula illustrated in FIG. 7 (Equation G), and the negative numerical values among the converted parameters are then converted to positive integers (see FIGS. 10B and 10C).

Through this, the homogenization processing and the nonlinear processing can be performed using a simple equation, which reduces the amount of computation. Additionally, because the output result of the homogenization + nonlinear processing is the same as the output obtained by executing the nonlinear processing after executing the homogenization processing, a drop in the prediction accuracy can be suppressed.

Next, in prediction model distribution step S103, data providing device 100 distributes the prediction model, converted in prediction mode conversion step S102, using the secret sharing method. A prediction model that has been distributed (the so-called "distributed prediction model") is obtained as a result.

Next, in step S104, data providing device 100 transmits the distributed prediction model obtained in prediction model distribution step S103 to the plurality of data processing devices 300, 310, and 320.

Next, in step S105, each of data processing devices 300, 310, and 320 stores the distributed prediction model received from data providing device 100 in its own distributed prediction model storage 301.

As described above, in the training phase, data providing device 100 creates the prediction model for performing the prediction processing, and then creates the distributed prediction model by distributing the created prediction model using the secret sharing method. Through this, the prediction model can be transmitted to the plurality of data processing devices 300, 310, and 320, while keeping the prediction model secret.

2.1.2 Prediction Phase

The prediction phase of prediction model conversion system 400 will be described next. FIG. 16B is a first sequence chart illustrating an example of operations performed by user terminal device 200 during the prediction phase of prediction model conversion system 400 according to the present embodiment. FIG. 16C is a second sequence chart illustrating an example of operations performed by user terminal device 200 during the prediction phase of prediction model conversion system 400 according to the present embodiment.

As illustrated in FIG. 16B, first, in step S201, user terminal device 200 (see FIG. 3) obtains information using sensor 201. Here, the information obtained through the sensing is a user's private data. The information obtained by sensor 201 is transmitted to feature amount calculator 202.

Next, in feature amount calculation step S202, user terminal device 200 uses feature amount calculator 202 to calculate a feature amount from the information received from sensor 201. The feature amount is a value indicating a feature of the information received from sensor 201. Referring again to FIG. 11, FIG. 11 illustrates an example in which feature amount 1, feature amount 2, and feature amount 3 are the stated feature amount.

Next, in feature amount distribution step S203, user terminal device 200 distributes the feature amount calculated in feature amount calculation step S202 using the secret sharing method. A feature amount that has been distributed (the so-called "distributed feature amount") is obtained as a result. A method for calculating the distributed feature amount will be described here with reference again to FIG. 12. For example, when the user information sensed by sensor 201 is feature amount 1, feature amount 1 is distributed in a number of parts corresponding to the number of data processing devices (three, here). The distributed feature amount to be transmitted to data processing device 300 is calculated by adding a random number (26, here) to feature amount 1. Furthermore, the random number 26 is added to that distributed feature amount to calculate the distributed feature amount to be transmitted to data processing device 310. Further still, the random number 26 is added to that distributed feature amount to calculate the distributed feature amount to be transmitted to data processing device 320.

Next, in step S204, user terminal device 200 transmits the distributed feature amounts to the plurality of data processing devices 300, 310, and 320. Specifically, as illustrated in FIG. 12, user terminal device 200 transmits, to the plurality of data processing devices 300, 310, and 320, distributed feature amounts obtained by distributing each of feature amount 1, feature amount 2, and feature amount 3.

When each of the plurality of data processing devices 300, 310, and 320 receives the distributed feature amount from user terminal device 200, the data processing device reads out the distributed prediction model stored in its own distributed prediction model storage (distributed prediction model storage 301 illustrated in FIG. 4), and starts prediction processing step S205.

In the prediction processing step, the plurality of data processing devices 300, 310, and 320 perform the prediction processing of the binarized neural network (BNN) using the distributed feature amount and the distributed prediction model that remain in the distributed state (remain in a secret state). Note that prediction processing step S205 will be described in detail later.

As a result, the plurality of data processing devices 300, 310, and 320 obtain the distributed prediction results as the results of the respective instances of prediction processing. Note that when the computations of the prediction processing are performed using the method of NPL 8, it is necessary, when performing the prediction processing, for the distributed information held by each of the plurality of data processing devices 300, 310, 320, and the data obtained from prediction processing on the distributed information, to be communicated among the plurality of data processing devices 300, 310, and 320.

Next, as illustrated in FIG. 16C, in step S206, each of the plurality of data processing devices 300, 310, and 320 transmits the distributed prediction result to user terminal device 200.

Next, in step S207, user terminal device 200 receives the distributed prediction results transmitted from the plurality of data processing devices 300, 310, and 320, decrypts the received distributed prediction results, and obtains a prediction result.

Finally, in step S208, user terminal device 200 uses the obtained prediction result in prediction result utilizer 205. As described above, user terminal device 200 may, for example, present the prediction result to the user as an image, as audio, or the like, and may also present lifestyle habits improvements, methods for reducing stress, recommended programs, or the like in addition to the prediction result.

As described above, in the prediction phase, data providing device 100 creates the prediction model for performing the prediction processing, and then creates the distributed prediction model by distributing the created prediction model using the secret sharing method. Through this, the prediction model can be transmitted to the plurality of data processing devices 300, 310, and 320, while keeping the prediction model secret. Then, user terminal device 200 decrypts the prediction result, presents the prediction result to the user, and utilizes the prediction result.

2.2 Prediction Processing Step S205

Prediction processing step S205 of prediction model conversion system 400 will be described in further detail below. FIG. 16D is a sequence chart illustrating an example of step S205 in FIG. 16B.

As illustrated in FIG. 16A, the plurality of data processing devices 300, 310, and 320 start prediction processing step S205 upon receiving the distributed feature amount from user terminal device 200 after obtaining the distributed prediction model from data providing device 100.

In prediction processing step S205, the plurality of data processing devices 300, 310, and 320 perform the prediction processing of the binarized neural network (BNN) using the distributed feature amount and the distributed prediction model which remain in a distributed state (remain in a secret state).

As illustrated in FIG. 16D, each of data processing devices 300, 310, and 320 starts processing which repeats a predetermined number of times (step S2051).

First, in matrix product operation step S2052, upon receiving a distributed input vector, which is the distributed feature amount (see FIG. 12), from user terminal device 200, the plurality of data processing devices 300, 310, and 320 compute a matrix product with a distributed weighting matrix (not shown), which is the distributed prediction model, and obtain a first distributed vector as an output.

Specifically, to describe this using operations performed by data processing device 300 as an example, upon receiving the distributed feature amount from user terminal device 200, data processing device 300 reads out the distributed prediction model stored in distributed prediction model storage 301. Then, data processing device 300 computes the matrix product of the distributed feature amount and the distributed prediction model, and obtains the first distributed vector, which is a first distributed feature amount.

Note that the distributed prediction model (here, the distributed weighting matrix) is obtained by using the secret sharing method to distribute the converted prediction model, which has been converted so that all of the elements are positive numerical values. As described above, the prediction model illustrated in FIG. 13, which is a binarized neural network (i.e., the pre-conversion weighting matrix), is converted so that -1 among the plurality of parameters (i.e., elements) of the prediction model are converted to positive numerical values corresponding to -1. By expressing all of the elements in the prediction model using positive numerical values, the prediction model conversion system can distribute the prediction model through the secret sharing method.

Next, in homogenization + nonlinear processing step S2053, the plurality of data processing devices 300, 310, and 320 compute a sum for each element included in the first distributed vector (see FIG. 8) using the first distributed vector obtained as an output in matrix product operation step S 2052 and the converted homogenization parameters obtained by converting the homogenization parameters. Then, for each element, a value of 0 or a numerical value corresponding to positive is converted to 1, and a numerical value corresponding to negative is converted to a positive integer corresponding to -1. Through this, in homogenization + nonlinear processing step S2053, a second distributed vector, which is a second distributed feature amount, is obtained as an output.

More specifically, the second distributed vector $y_i$ is obtained by adding the converted homogenization parameter $k_i$ to each element $x_i$ of the first distributed vector and computing whether or not the result is at least 0, while keeping the values secret, as illustrated in FIG. 8.

Next, the plurality of data processing devices 300, 310, and 320 perform matrix product operation step S2052 using the second distributed vector obtained the output in homogenization + nonlinear processing step S2053 and the distributed prediction model. Then, the plurality of data processing devices 300, 310, and 320 execute homogenization + nonlinear processing step S2053 using a third distributed vector obtained from matrix product operation step S2052 as an input. A fourth distributed vector is obtained as a result.

In this manner, the above-described series of steps, namely matrix product operation step S2052 and homogenization + nonlinear processing step S2053, are repeated a predetermined number of times. Referring again FIG. 13, in the present embodiment, this series of steps (so-called "layers") is repeated twice, for example. By ending the processing (step S2054) after a predetermined number of repetitions (here, two) in this manner, the fourth distributed vector is obtained.

Next, in matrix computation step S2055, the plurality of data processing devices 300, 310, and 320 calculate a matrix product of the fourth distributed vector, which has been obtained as an output by repeating the above-described series of steps S2052 to S2053 a predetermined number of times (here, twice), and a weighting matrix. A fifth distributed vector is obtained as a result.

Next, in homogenization processing step S2056, homogenization processing is executed on the fifth distributed vector obtained from matrix computation step S2055. A sixth distributed vector is obtained as a result.

Finally, in maximum value search step S2057, the element having the maximum value among the sixth distributed vectors obtained from homogenization processing step S2056 is searched out. The distributed prediction result is obtained as a result.

As described thus far, with the prediction model conversion method according to the present embodiment, the homogenization parameter included in the prediction model of the neural network is converted, and the new parameter $k_i$ is generated, so that the homogenization processing and the nonlinear processing can be executed through simple processing, which makes it possible to execute a plurality of instances of processing using, for example, the simple equation illustrated in FIG. 8. Accordingly, the prediction processing can be performed using the distributed feature amount and the distributed prediction model remaining in the distributed state, i.e., remaining secret. As such, even if a third party has obtained data involved in the prediction processing during the prediction processing, it is difficult to decrypt the original data. Accordingly, applying the prediction model conversion method according to the present embodiment makes it possible to protect highly-sensitive information, such as a user's private data, a company's proprietary knowledge, and the like, from third parties. Additionally, because the output result of the homogenization + nonlinear processing is the same as the output obtained by executing the nonlinear processing after executing the homogenization processing, a drop in the prediction accuracy when performing the prediction processing while keeping the data secret can be suppressed. Furthermore, a plurality of instances of processing can be executed using simple equations, which makes it possible to reduce the amount of computation.

Other Embodiments

A prediction model conversion method and a prediction model conversion system according to the present disclosure have been described based on embodiments. However, the present disclosure is not limited to the foregoing embodiments. Variations on the embodiments conceived by one skilled in the art, other embodiments implemented by combining constituent elements from the embodiments, fall within the scope of the present disclosure. The present disclosure is also inclusive of the following cases.

(1) Although the foregoing embodiment describes an example in which data providing device 100 uses prediction model converter 104 to convert negative numerical values, among a plurality of parameters (also called "elements" hereinafter") included in the prediction model, to positive numerical values. Prediction model converter 104 may perform the following conversion processing on the prediction model. Prediction model converter 104 may convert a negative numerical value to a positive numerical value by converting a value in a plurality of parameters included in the prediction model to a set including a sign part indicating a sign of the numerical value as a 0 or a 1 and a numerical value part indicating an absolute value of the numerical value. For example, for a given element $x$ (where $x$ is an integer), assume that $x = ab$ (where $a$ is the sign part of $x$, and $b$ is the numerical value part indicating the absolute value of $x$). If the given element $x$ is 0 or a positive numerical value, 0 is substituted for the sign part $a$, whereas if the given element $x$ is a negative numerical value, 1 is substituted for the sign part $a$. The absolute value of $x$ is substituted for the numerical value part $b$. The given element $x$ is converted into a set $(a,b)$ of $a$ and $b$. By applying the above conversion processing to all the elements included in the prediction model, negative numerical values in the prediction model can be converted to positive numerical values. Therefore, all the elements included in the prediction model after the conversion processing are expressed only as positive numerical values (here, positive integers). Through this, prediction model distributor 105 can distribute the prediction model following the conversion processing using the secret sharing method.

(2) Although the foregoing embodiment does not specify the specific method for determining modulus $p$ of the secret sharing method, the optimal modulus $p$ may be determined through the following operations. If the ranges of values of the prediction model and input data are known, the upper bound of the values during the computation in the prediction processing can be found. For example, focusing on the first matrix product operation in the prediction processing, if the range of input vector values is from 0 to 255, the number of input vector dimensions is $a$, and the number of output vector dimensions is $b$, then the range of output vector values is from $-255a$ to $255a$, and the upper bound of the values during the computation in this matrix product operation is $255a$. Furthermore, in the next homogenization + nonlinear processing, if the range of input vector values is from $-255a$ to $255a$, the number of input vector dimensions is $b$, the number of output vector dimensions is $b$, and the maximum value of the parameter $k$ in the homogenization + nonlinear processing is $c$, the value of the output vector is -1 or 1, and the upper bound of the values during the computation is $255a + c$. Thus by determining the upper bound of the values during each instance of processing in the prediction processing, the upper bound of the values during the computation in the overall prediction processing can be computed. For example, if the upper bound that has been found is $u$, the optimal modulus $p$ that minimizes the amount of computation can be selected by selecting the smallest prime number greater than or equal to $2u+1$ as modulus $p$ of the secret sharing method.

(3) Additionally, because the amount of computation depends on the bit length of modulus $p$, if the bit length is the same, the amount of computation will be the same regardless of whether a small prime number is selected as modulus $p$ or a large prime number is selected as modulus $p$. However, there are some algorithms in the secret sharing method that can be processed more efficiently using a larger prime number even when the bit length is the same, and thus the smallest prime number greater than or equal to $2u+1$ may be selected as described above, or the largest prime number with the same bit length as that prime number may be selected as modulus $p$. This may further improve the efficiency.

(4) Although the foregoing embodiment describes processing using matrix product operation, homogenization processing, homogenization + nonlinear processing, and maximum value search processing as an example of the prediction processing, processing such as convolution and pooling may be used. An example of prediction processing using such processing is illustrated in FIG. 17. FIG. 17 is also an example, and the number of times and order in which each instance of processing is performed is not limited thereto.

Upon obtaining the distributed feature amount from user terminal device 200, the plurality of data processing devices 300, 310, and 320 starts processing which repeats a predetermined number of times (step S301).

First, in step S302, the plurality of data processing devices 300, 310, and 320 perform the processing of convolution using distributed input vectors and distributed convolution parameters, and obtain the first distributed vector. The convolution processing can be performed by a combination of matrix product and addition.

Next, in step S303, the plurality of data processing devices 300, 310, and 320 perform the homogenization + nonlinear processing using the first distributed vector obtained as an output in step S401 and the converted homogenization parameters obtained by converting the homogenization parameters, and obtain the second distributed vector.

Next, in step S304, the plurality of data processing devices 300, 310, and 320 perform the processing of convolution using the second distributed vector obtained as an output in step S303 and distributed convolution parameters, and obtain the third distributed vector.

Next, in step S305, the plurality of data processing devices 300, 310, and 320 perform the pooling processing on the third distributed vector obtained as output in step S403, and obtain the fourth distributed vector. Pooling includes the processing for calculating the maximum (Max Pooling), average (Average Pooling), or sum (Sum Pooling) of a defined area, as illustrated in FIG. 17, and all instances pooling processing may compute only one the maximum, average, mean, etc., or may combine these.

Next, in step S306, the plurality of data processing devices 300, 310, and 320 perform the homogenization + nonlinear processing using the fourth distributed vector obtained as an output in step S305 and the converted homogenization parameters obtained by converting the homogenization parameters, and obtain the fifth distributed vector.

In the present embodiment, after repeating step S302 to step S306 a predetermined number of times (step S307), the matrix product operation is computed using an nth distributed vector, which is the output of the last instance of homogenization + nonlinear processing, and the distributed prediction model (step S308), the homogenization processing is performed using that output and the homogenization parameters (step S309), and finally, the maximum value search processing is performed (step S310). The distributed prediction result is obtained as a result.

(5) As an example of the maximum value search processing by prediction processor 302, the foregoing embodiment describes a processing method in which, for each element, the magnitude relationship is compared with all other elements, and the element for which the theoretical product of the comparison results is 1 is determined to be the element having the maximum value. However, the method is not limited thereto. For example, in the maximum value search processing, the element having the maximum value (called the "maximum value element" hereinafter) may be obtained through the following processing. The first element ("element A") of the plurality of elements of the input vector for the maximum value search processing is set as a tentative maximum value element, and the magnitude relationships between element A and the remaining elements are compared in sequence. If an element ("element B") is found that is larger than element A, which is the tentative maximum value element, element B is taken as the new tentative maximum value element, and the magnitude relationships between element B and the remaining elements are compared in sequence. Assuming that element B is the tentative maximum value element at the point where all the elements have been compared, the numerical value and number of element B is the output of the maximum value search processing.

(6) The maximum value search processing by prediction processor 302 may also be used to find the maximum value element through the following processing. For example, for all the elements of the input vector for the maximum value search processing, the magnitude relationship between neighboring elements is compared, and the smaller elements are excluded. The maximum value element can be obtained by repeating this processing and determining that the last remaining element is the maximum value element.

(7) Although the foregoing embodiment describes an example of processing in which user terminal device 200 utilizes the prediction result, the processing may be that described below. After receiving and decrypting the prediction result, the user may send information pertaining to the correctness and usefulness of the prediction result to data providing device 100.

(8) Although the foregoing embodiment describes an example of processing in which user terminal device 200 utilizes the prediction result, the processing may be that described below. After receiving and decrypting the prediction results from the plurality of data processing devices 300, 310, and 320, user terminal device 200 may send information pertaining to the correctness and usefulness of the prediction results to data providing device 100, along with information pertaining to the user who input information to the prediction model conversion system (called "user information" hereinafter).

(9) Although the foregoing embodiment describes an example of the processing performed by data providing device 100, the following processing may be performed. Data providing device 100 may re-train the prediction model based on a set of user information received from user terminal device 200 and information pertaining to the prediction results, or based on the information pertaining to the prediction results only. Data providing device 100 then distributes the prediction model, newly created through the re-training, using the secret sharing method, and transmits the model to the plurality of data processing devices 300, 310, and 320 as a new distributed prediction model. The plurality of data processing devices 300, 310, and 320 store the received new prediction model in the prediction model storage and update the prediction model.

(10) Although in the foregoing embodiment, the homogenization processing and the nonlinear processing can be performed using a simple equation, and the amount of computation can be reduced, by converting the homogenization parameters, the prediction processing may be converted in the following manner. Because the matrix product operation, the convolution operation, and so on, as well as the homogenization processing, are linear computations, the matrix product operation and the homogenization processing, or the convolution operation and the homogenization processing, can be performed simultaneously. Rather than combining the homogenization processing and the nonlinear processing, data providing device 100 may generate new prediction processing by combining the matrix product operation and the homogenization processing or the convolution operation and the homogenization processing, and distribute that processing to data processing devices 300, 310, and 320. In this case, the prediction model is converted by generating new parameters using the weighting matrix, convolution parameters, and homogenization parameters, which are the parameters of the matrix product operation.

(11) Additionally, after converting the matrix product operation and the homogenization processing, and the convolution operation and the homogenization processing, into processing which can be performed simultaneously, the nonlinear processing may also be combined to convert the processing into prediction processing in which the matrix product operation, the homogenization processing, and the nonlinear processing, as well as the convolution operation, the homogenization processing, and the nonlinear processing, can be performed using a simple equation.

(12) Each device in the foregoing embodiments is specifically a computer system constituted by a microprocessor, ROM (Read Only Memory), RAM (Random Access Memory), a hard disk unit, a display unit, a keyboard, a mouse, and the like. A computer program is recorded in the RAM or hard disk unit. Each device realizes the functions thereof by the microprocessor operating in accordance with the computer program. Here, the computer program is constituted by a combination of a plurality of command codes that indicate commands made to a computer to achieve a predetermined function.

(13) Some or all of the constituent elements constituting the devices in the foregoing embodiments may be implemented by a single integrated circuit through system LSI (Large-Scale Integration). "System LSI" refers to very-large-scale integration in which multiple constituent elements are integrated on a single chip, and specifically, refers to a computer system configured including a microprocessor, ROM, RAM, and the like. A computer program is recorded in the RAM. The system LSI circuit realizes the functions of the devices by the microprocessor operating in accordance with the computer program.

The parts of the constituent elements constituting the foregoing devices may be implemented individually as single chips, or may be implemented with a single chip including some or all of the devices.

Although the term "system LSI" is used here, other names, such as IC (Integrated Circuit), LSI, super LSI, ultra LSI, and so on may be used, depending on the level of integration. Further, the manner in which the circuit integration is achieved is not limited to LSIs, and it is also possible to use a dedicated circuit or a general purpose processor. It is also possible to employ a FPGA (Field Programmable Gate Array) which is programmable after the LSI circuit has been manufactured, or a reconfigurable processor in which the connections or settings of the circuit cells within the LSI circuit can be reconfigured.

Further, if other technologies that improve upon or are derived from semiconductor technology enable integration technology to replace LSI circuits, then naturally it is also possible to integrate the function blocks using that technology. Biotechnology applications are one such foreseeable example.

(14) Some or all of the constituent elements constituting the foregoing devices may be constituted by IC cards or stand-alone modules that can be removed from and mounted in the apparatus. The IC card or module is a computer system constituted by a microprocessor, ROM, RAM, and the like. The IC card or module may include the above very-large-scale integration LSI circuit. The IC card or module realizes the functions thereof by the microprocessor operating in accordance with the computer program. The IC card or module may be tamper-resistant.

(15) The present disclosure may be realized by the methods described above. This may be a computer program that implements these methods on a computer, or a digital signal constituting the computer program.

Additionally, the present disclosure may also be computer programs or digital signals recorded in a computer-readable recording medium such as a flexible disk, a hard disk, a CD-ROM, an MO (Magneto-Optical Disc), a DVD, a DVD-ROM, a DVD-RAM, a BD (Blu-ray (registered trademark) Disc), semiconductor memory, or the like. The constituent elements may also be the digital signals recorded in such a recording medium.

Additionally, the present disclosure may be realized by transmitting the computer program or digital signal via a telecommunication line, a wireless or wired communication line, a network such as the Internet, a data broadcast, or the like.

Additionally, the present disclosure may be a computer system including a microprocessor and memory, where the memory records the above-described computer program and the microprocessor operates in accordance with the computer program.

Additionally, the present disclosure may be implemented by another independent computer system, by recording the program or the digital signal in the recording medium and transferring the recording medium, or by transferring the program or the digital signal over the network or the like.

(16) The above-described embodiments and variations may be combined as well.

[Industrial Applicability]

The present disclosure can be applied in systems that protect privacy by ensuring data processing devices do not handle a user's sensitive information in plain text.

[Reference Signs List]

> 100 Data providing device
> 101 Training data storage
> 102 Trainer
> 103 Prediction model storage
> 104 Prediction model converter
> 105 Prediction model distributor
> 106, 206, 303 Communicator
> 200 User terminal device
> 201 Sensor
> 202 Feature amount calculator
> 203 Feature amount distributor
> 204 Decryptor
> 205 Prediction result utilizer
> 300, 310, 320 Data processing device
> 301 Distributed prediction model storage
> 302 Prediction processor
> 400 Prediction model conversion system

**Claims**

1. A computer-implemented prediction model conversion method, comprising:

   converting a prediction model (S001) by converting a plurality of parameters which are included in the prediction model and are performing homogenization processing into at least one parameter for performing processing including nonlinear processing, the prediction model being a neural network; and
   generating an encrypted prediction model (S002) that performs prediction processing with input in a secret state remaining secret by encrypting the prediction model that has been converted,
   wherein the homogenization processing is processing performed by an equation $y_i = s_i x_i + t_i$, where $x_i$ is an input and $y_i$ is an output,
   $s_i$ and $t_i$ are the plurality of parameters for performing the homogenization processing,
   the processing including the nonlinear processing is processing performed by Equation (1), and

$$y_i = \begin{cases} 1 & \text{if } (x_i + k_i) \geq 0 \\ -1 & \text{if } (x_i + k_i) < 0 \end{cases}$$

   ... Equation (1)

   $k_i$ is the at least one parameter for performing the processing including the nonlinear processing, and is determined using $s_i$ and $t_i$,
   wherein $k_i$ is expressed by Equation (2),

$$k_i = \begin{cases} u, & \text{if } {}^\forall x_i, \ s_i x_i + t_i \geq 0 \\ -u - 1, & \text{if } {}^\forall x_i, \ s_i x_i + t_i < 0 \\ \left| \dfrac{t_i}{s_i} \right|, & \text{if } s_i > 0 \\ \left\lceil \dfrac{t_i}{s_i} \right\rceil + \dfrac{p-1}{2}, & \text{if } s_i < 0 \end{cases} \qquad \text{... Equation (2)}$$

where u is a theoretical maximum value during computation of the prediction processing, and p is a divisor used in the encrypting.

2. The prediction model conversion method according to claim 1,

the at least one parameter for performing the processing including the nonlinear processing is one parameter, and in the converting, the plurality of parameters for performing the homogenization processing are converted into the one parameter for performing the processing including the nonlinear processing.

3. The prediction model conversion method according to claim 1 or 2, wherein in the generating:

the prediction model is encrypted by distributing, through a secret sharing method, the prediction model that has been converted, and in the distributing of the prediction model, the at least one parameter for performing the processing including the nonlinear processing is distributed.

4. The prediction model conversion method according to any one of claims 1 to 3, further comprising:

determining the divisor in a range greater than a possible value of an element of the prediction model.

5. The prediction model conversion method according to any one of claims 1 to 4, wherein in the converting, the divisor is added to a negative numerical value in a plurality of parameters included in the prediction model to convert the negative numerical value to a positive numerical value.

6. The prediction model conversion method according to any one of claims 1 to 5, wherein the prediction model is a binarized neural network including a plurality of parameters each comprising a binary value of -1 or 1.

7. The prediction model conversion method according to any one of claims 1 to 6, further comprising:

training the prediction model using training data collected in advance, wherein a parameter obtained through the training as at least one parameter for performing the homogenization processing is converted in the converting.

8. The prediction model conversion method according to any one of claims 1 to 7, wherein in the converting, a negative numerical value is converted to a positive numerical value by converting a numerical value in a plurality of parameters included in the prediction model to a set including a sign part indicating a sign of the numerical value as 0 or 1 and a numerical value part indicating an absolute value of the numerical value.

9. The prediction model conversion method according to any one of claims 1 to 8, further comprising:

calculating a feature amount from data obtained by sensing; and distributing, through the secret sharing method, the feature amount that has been calculated.

10. The prediction model conversion method according to claim 9, further comprising:

executing prediction processing by the prediction model that has been distributed, by inputting, to the prediction model that has been distributed, the feature amount that has been distributed,

wherein the executing includes the nonlinear processing, and

the nonlinear processing is processing of converting an input to the nonlinear processing into 1 when the input is 0 or a numerical value corresponding to a positive, and into a positive numerical value corresponding to -1 when the input is a numerical value corresponding to a negative.

11. A prediction model conversion system, comprising:

a prediction model converter (104) that converts a prediction model by converting a plurality of parameters which are included in the prediction model and are for performing homogenization processing into at least one parameter for performing processing including nonlinear processing, the prediction model being a neural network; and a prediction model encryptor that generates an encrypted prediction model that performs prediction processing with input in a secret state remaining secret by encrypting the prediction model that has been converted,

wherein the homogenization processing is processing performed by an equation $y_i = s_i x_i + t_i$, where $x_i$ is an input and $y_i$ is an output,

$s_i$ and $t_i$ are the plurality of parameters for performing the homogenization processing,

the processing including the nonlinear processing is processing performed by Equation (1), and

$$y_i = \begin{cases} 1 & \text{if } ( x_i + k_i ) \geq 0 \\ -1 & \text{if } ( x_i + k_i ) < 0 \end{cases}$$

$$\ldots \text{Equation (1)}$$

$k_i$ is the at least one parameter for performing the processing including the nonlinear processing, and is determined using $s_i$ and $t_i$,

wherein $k_i$ is expressed by Equation (2),

$$k_i = \begin{cases} u, & \text{if } {}^{\forall}x_i, \; s_i x_i + t_i \geq 0 \\ -u-1, & \text{if } {}^{\forall}x_i, \; s_i x_i + t_i < 0 \\ \left\lfloor \dfrac{t_i}{s_i} \right\rfloor, & \text{if } s_i > 0 \\ \left\lceil \dfrac{t_i}{s_i} \right\rceil + \dfrac{p-1}{2}, & \text{if } s_i < 0 \end{cases}$$

$$\ldots \text{Equation (2)}$$

where u is a theoretical maximum value during computation of the prediction processing,
and p is a divisor used in the encrypting.

**Patentansprüche**

1. Computerimplementiertes Prädiktionsmodell-Wandlungsverfahren, umfassend:

Wandeln eines Prädiktionsmodells (S001) durch das Wandeln einer Vielzahl von Parametern, die in dem Prädiktionsmodell enthalten sind und eine Homogenisierungsverarbeitung durchführen, zu wenigstens einem Parameter für das Durchführen einer Verarbeitung einschließlich einer nicht-linearen Verarbeitung, wobei das Prädiktionsmodell ein neuronales Netz ist, und

Generieren eines verschlüsselten Prädiktionsmodells (S002), das eine Prädiktionsverarbeitung mit einer Eingabe in einem geheimen Zustand, der geheim bleibt, durchführt, durch das Verschlüsseln des gewandelten Prädiktionsmodells,

wobei die Homogenisierungserarbeitung eine durch eine Gleichung $y_i = s_i x_i + t_i$ durchgeführte Verarbeitung ist,

wobei $x_i$ eine Eingabe ist und $y_i$ eine Ausgabe ist,

wobei $s_i$ und $t_i$ die Vielzahl von Parametern für das Durchführen der Homogenisierungsverarbeitung sind,

wobei die Verarbeitung einschließlich der nicht-linearen Verarbeitung eine durch die Gleichung (1) durchgeführte Verarbeitung ist:

$$y_i = \begin{cases} 1 & \text{if } (x_i + k_i) \geq 0 \\ -1 & \text{if } (x_i + k_i) < 0 \end{cases}$$

(Gleichung 1)

wobei $k_i$ der wenigstens eine Parameter für das Durchführen der Verarbeitung einschließlich der nicht-linearen Verarbeitung ist und unter Verwendung von $s_i$ und $t_i$ bestimmt wird,

wobei $k_i$ durch die Gleichung (2) ausgedrückt wird:

$$k_i = \begin{cases} u, & \text{if } {}^{\forall}x_i, \ s_i x_i + t_i \geq 0 \\ -u-1, & \text{if } {}^{\forall}x_i, \ s_i x_i + t_i < 0 \\ \left\lfloor \dfrac{t_i}{s_i} \right\rfloor, & \text{if } s_i > 0 \\ \left\lceil \dfrac{t_i}{s_i} \right\rceil + \dfrac{p-1}{2}, & \text{if } s_i < 0 \end{cases}$$

(Gleichung 2)

wobei u ein theoretischer maximaler Wert während der Berechnung der Prädiktionsverarbeitung ist und p ein in der Verschlüsselung verwendeter Divisor ist.

2. Prädiktionsmodell-Wandlungsverfahren nach Anspruch 1,

wobei der wenigstens eine Parameter für das Durchführen der Verarbeitung einschließlich der nicht-linearen Verarbeitung ein einzelner Parameter ist, und

beim Wandeln die Vielzahl von Parametern für das Durchführen der Homogenisierungsverarbeitung zu dem einen einzelnen Parameter für das Durchführen der Verarbeitung einschließlich der nicht-linearen Verarbeitung gewandelt werden.

3. Prädiktionsmodell-Wandlungsverfahren nach Anspruch 1 oder 2,

wobei bei dem Generieren:

das Prädiktionsmodell verschlüsselt wird durch das Verteilen, mittels einer geheimen Verteilungsmethode, des gewandelten Prädiktionsmodells, und

bei dem Verteilen des Prädiktionsmodells der wenigstens eine Parameter für das Durchführen der Verarbeitung einschließlich der nicht-linearen Verarbeitung verteilt wird.

4. Prädiktionsmodell-Wandlungsverfahren nach einem der Ansprüche 1 bis 3, das weiterhin umfasst:
Bestimmen des Divisors in einem Bereich, der größer als ein möglicher Wert eines Elements des Prädiktionsmodells ist.

5. Prädiktionsmodell-Wandlungsverfahren nach einem der Ansprüche 1 bis 4,
wobei bei dem Wandeln der Divisor zu einem negativen numerischen Wert in einer Vielzahl von Parametern in dem Prädiktionsmodell addiert wird, um den negativen numerischen Wert zu einem positiven numerischen Wert zu wandeln.

6. Prädiktionsmodell-Wandlungsverfahren nach einem der Ansprüche 1 bis 5,
wobei das Prädiktionsmodell ein binarisiertes neuronales Netz ist, das eine Vielzahl von Parametern, die jeweils einen binären Wert von -1 oder 1 aufweisen, enthält.

7.  Prädiktionsmodell-Wandlungsverfahren nach einem der Ansprüche 1 bis 6, das weiterhin umfasst:

    Trainieren des Prädiktionsmodells unter Verwendung von zuvor gesammelten Trainingsdaten,
    wobei ein durch das Trainieren erhaltener Parameter als wenigstens ein Parameter für das Durchführen der
    Homogenisierungsverarbeitung beim Wandeln gewandelt wird.

8.  Prädiktionsmodell-Wandlungsverfahren nach einem der Ansprüche 1 bis 7,
    wobei bei dem Wandeln ein negativer numerischer Wert zu einem positiven numerischen Wert gewandelt wird,
    indem ein numerischer Wert in einer Vielzahl von Parametern in dem Prädiktionsmodell zu einem Satz einschließlich
    eines Vorzeichenteils, der ein Vorzeichen des numerischen Werts als 0 oder 1 angibt, und eines Numerischer-Wert-
    Teils, der einen absoluten Wert des numerischen Werts angibt, gewandelt wird.

9.  Prädiktionsmodell-Wandlungsverfahren nach einem der Ansprüche 1 bis 8, das weiterhin umfasst:

    Berechnen einer Merkmalsgröße aus durch ein Erfassen erhaltenen Daten, und
    Verteilen, mittels der geheimen Verteilungsmethode, der berechneten Merkmalsgröße.

10. Prädiktionsmodell-Wandlungsverfahren nach Anspruch 9, das weiterhin umfasst:

    Ausführen einer Prädiktionsverarbeitung durch das verteilte Prädiktionsmodell, indem die verteilte Merkmalsgröße in das verteilte Prädiktionsmodell eingegeben wird,
    wobei das Ausführen die nicht-lineare Verarbeitung enthält, und
    die nicht-lineare Verarbeitung eine Verarbeitung zum Wandeln einer Eingabe zu der nicht-linearen Verarbeitung
    zu 1 ist, wenn die Eingabe 0 oder ein numerischer Wert in Entsprechung zu einer positiven Zahl ist, und zu
    einem positiven numerischen Wert in Entsprechung zu -1 ist, wenn die Eingabe ein numerischer Wert in Entsprechung zu einer negativen Zahl ist.

11. Prädiktionsmodell-Wandlungssystem, umfassend:

    einen Prädiktionsmodell-Wandler (104), der ein Prädiktionsmodell durch das Wandeln einer Vielzahl von Parametern, die in dem Prädiktionsmodell enthalten sind und für das Durchführen einer Homogenisierungsverarbeitung vorgesehen sind, zu wenigstens einem Parameter für das Durchführen einer Verarbeitung einschließlich
    einer nicht-linearen Verarbeitung, wandelt, wobei das Prädiktionsmodell ein neuronales Netz ist, und
    einen Prädiktionsmodell-Verschlüsseler, der ein verschlüsseltes Prädiktionsmodell generiert, das eine Prädiktionsverarbeitung mit einer Eingabe in einem geheimen Zustand, der geheim bleibt, durchführt, indem er das
    gewandelte Prädiktionsmodell verschlüsselt,
    wobei die Homogenisierungsverarbeitung eine durch eine Gleichung $y_i = s_i x_i + t_i$ durchgeführte Verarbeitung ist,
    wobei $x_i$ eine Eingabe ist und $y_i$ eine Ausgabe ist,
    wobei $s_i$ und $t_i$ die Vielzahl von Parametern für das Durchführen der Homogenisierungsverarbeitung sind,
    wobei die Verarbeitung einschließlich der nicht-linearen Verarbeitung eine durch die Gleichung (1) durchgeführte
    Verarbeitung ist:

$$y_i = \begin{cases} 1 & \text{if } (x_i + k_i) \geq 0 \\ -1 & \text{if } (x_i + k_i) < 0 \end{cases}$$

(Gleichung 1)

    wobei $k_i$ der wenigstens eine Parameter für das Durchführen der Verarbeitung einschließlich der nicht-linearen
    Verarbeitung ist und unter Verwendung von $s_i$ und $t_i$ bestimmt wird,
    wobei $k_i$ durch die Gleichung (2) ausgedrückt wird:

$$k_i = \begin{cases} u, & \text{if } {}^{\forall}x_i, \ s_i x_i + t_i \geq 0 \\ -u - 1, & \text{if } {}^{\forall}x_i, \ s_i x_i + t_i < 0 \\ \left|\dfrac{t_i}{s_i}\right|, & \text{if } s_i > 0 \\ \left|\dfrac{t_i}{s_i}\right| + \dfrac{p-1}{2}, & \text{if } s_i < 0 \end{cases}$$

(Gleichung 2)

wobei u ein theoretischer maximaler Wert während der Berechnung der Prädiktionsverarbeitung ist und p ein in der Verschlüsselung verwendeter Divisor ist.

## Revendications

1. Procédé mis en oeuvre par ordinateur de conversion de modèle de prédiction, comprenant :

   convertir un modèle de prédiction (S001) en convertissant une pluralité de paramètres qui sont inclus dans le modèle de prédiction et qui effectuent un traitement d'homogénéisation en au moins un paramètre permettant d'effectuer un traitement comprenant un traitement non linéaire, le modèle de prédiction étant un réseau neuronal ; et

   générer un modèle de prédiction crypté (S002) qui effectue un traitement de prédiction avec une entrée dans un état secret restant secret en cryptant le modèle de prédiction qui a été converti,

   dans lequel le traitement d'homogénéisation est un traitement effectué par l'équation $y_i = s_i x_i + t_i$, où $x_i$ est une entrée et $y_i$ est une sortie,

   $s_i$ et $t_i$ sont la pluralité de paramètres permettant d'effectuer le traitement d'homogénéisation,

   le traitement comprenant le traitement non linéaire est un traitement effectué par l'Équation (1), et

   $$y_i = \begin{cases} 1 & si \ (x_i + k_i) \geq 0 \\ -1 & si \ (x_i + k_i) < 0 \end{cases}$$ ...Équation (1)

   $k_i$ est l'au moins un paramètre permettant d'effectuer le traitement comprenant le traitement non linéaire, et est déterminé en utilisant $s_i$ et $t_i$,

   où $k_i$ est exprimé par l'Équation (2),

   $$k_i \begin{cases} u, & si \ {}^{\forall}X_i, \ S_i X_i + t_i \geq 0 \\ -u - 1, & si \ {}^{\forall}X_i, \ S_i X_i + t_i < 0 \\ \left|\dfrac{t_i}{S_i}\right|, & si \ S_i > 0 \\ \left|\dfrac{t_i}{S_i}\right| + \dfrac{p-1}{2}, & si \ S_i < 0 \end{cases}$$ ...Équation (2)

   où u est une valeur maximale théorique lors du calcul du traitement de prédiction, et p est un diviseur utilisé dans le cryptage.

2. Procédé de conversion de modèle de prédiction selon la revendication 1,

   l'au moins un paramètre permettant d'effectuer le traitement comprenant le traitement non linéaire est un paramètre, et

   lors de la conversion, la pluralité de paramètres permettant d'effectuer le traitement d'homogénéisation sont convertis en un seul paramètre permettant d'effectuer le traitement comprenant le traitement non linéaire.

**3.** Procédé de conversion de modèle de prédiction selon la revendication 1 ou 2,
dans lequel, lors de la génération :

le modèle de prédiction est crypté en distribuant, par un procédé de partage secret, le modèle de prédiction qui a été converti, et
lors de la distribution du modèle de prédiction, l'au moins un paramètre permettant d'effectuer le traitement comprenant le traitement non linéaire est distribué.

**4.** Procédé de conversion de modèle de prédiction selon l'une quelconque des revendications 1 à 3, comprenant en outre :
déterminer le diviseur dans une plage supérieure à une valeur possible d'un élément du modèle de prédiction.

**5.** Procédé de conversion de modèle de prédiction selon l'une quelconque des revendications 1 à 4,
dans lequel, lors de la conversion, le diviseur est ajouté à une valeur numérique négative dans une pluralité de paramètres inclus dans le modèle de prédiction pour convertir la valeur numérique négative en une valeur numérique positive.

**6.** Procédé de conversion de modèle de prédiction selon l'une quelconque des revendications 1 à 5,
dans lequel le modèle de prédiction est un réseau neuronal binarisé comprenant une pluralité de paramètres comprenant chacun une valeur binaire de -1 ou 1.

**7.** Procédé de conversion de modèle de prédiction selon l'une quelconque des revendications 1 à 6, comprenant en outre :

apprendre le modèle de prédiction en utilisant des données d'apprentissage collectées au préalable,
dans lequel un paramètre obtenu par l'apprentissage comme étant au moins un paramètre permettant d'effectuer le traitement d'homogénéisation est converti lors de la conversion.

**8.** Procédé de conversion de modèle de prédiction selon l'une quelconque des revendications 1 à 7,
dans lequel, lors de la conversion, une valeur numérique négative est convertie en une valeur numérique positive en convertissant une valeur numérique dans une pluralité de paramètres inclus dans le modèle de prédiction en un ensemble comprenant une partie signe indiquant un signe de la valeur numérique comme 0 ou 1 et une partie de valeur numérique indiquant une valeur absolue de la valeur numérique.

**9.** Procédé de conversion de modèle de prédiction selon l'une quelconque des revendications 1 à 8, comprenant en outre :

calculer une quantité de caractéristiques à partir de données obtenues par détection ; et
distribuer, par le procédé de partage secret, la quantité de caractéristiques qui a été calculée.

**10.** Procédé de conversion de modèle de prédiction selon la revendication 9, comprenant en outre :

exécuter un traitement de prédiction par le modèle de prédiction qui a été distribué, en entrant, dans le modèle de prédiction qui a été distribué, la quantité de caractéristiques qui a été distribuée,
dans lequel l'exécution comprend le traitement non linéaire, et
le traitement non linéaire est un traitement consistant à convertir une entrée du traitement non linéaire en 1 lorsque l'entrée est 0 ou une valeur numérique correspondant à une valeur positive, et en une valeur numérique positive correspondant à -1 lorsque l'entrée est une valeur numérique correspondant à une valeur négative.

**11.** Système de conversion de modèle de prédiction, comprenant :

un convertisseur de modèle de prédiction (104) qui convertit un modèle de prédiction en convertissant une pluralité de paramètres qui sont inclus dans le modèle de prédiction et effectuent un traitement d'homogénéisation en au moins un paramètre permettant d'effectuer un traitement comprenant un traitement non linéaire, le modèle de prédiction étant un réseau neuronal ; et
un crypteur de modèle de prédiction qui génère un modèle de prédiction crypté qui effectue un traitement de prédiction avec une entrée dans un état secret restant secret en cryptant le modèle de prédiction qui a été converti,

dans lequel le traitement d'homogénéisation est un traitement effectué par l'équation $y_i = s_i x_i + t_i$, où $x_i$ est une entrée et $y_i$ est une sortie,

$s_i$ et $t_i$ sont la pluralité de paramètres permettant d'effectuer le traitement d'homogénéisation,

le traitement comprenant le traitement non linéaire est un traitement effectué par l'Équation (1), et

$$y_i = \begin{cases} 1 & si\ (x_i + k_i) \geq 0 \\ -1 & si\ (x_i + k_i) < 0 \end{cases} \quad \text{...Équation (1)}$$

$k_i$ est l'au moins un paramètre permettant d'effectuer le traitement comprenant le traitement non linéaire, et est déterminé en utilisant $s_i$ et $t_i$,

où $k_i$ est exprimé par l'Équation (2),

$$k_i \begin{cases} u, & si\ ^{\forall}X_i,\ S_i X_i + t_i \geq 0 \\ -u-1, & si\ ^{\forall}X_i,\ S_i X_i + t_i < 0 \\ \left|\dfrac{t_i}{S_i}\right|, & si\ S_i > 0 \\ \left|\dfrac{t_i}{S_i}\right| + \dfrac{p-1}{2}, & si\ S_i < 0 \end{cases} \quad \text{...Équation (2)}$$

où $u$ est une valeur maximale théorique lors du calcul du traitement de prédiction, et $p$ est un diviseur utilisé dans le cryptage.

# FIG. 1

400

User

200

User terminal device

Company

100

Data providing device

Data processing device

Data processing device

Data processing device

300

310

320

# FIG. 2

100

Data providing device

101 Training data storage

102 Trainer

103 Prediction model storage

104 Prediction model converter

105 Prediction model distributor

106 Communicator

# FIG. 3

200

User terminal device

201 — Sensor

205 — Prediction result utilizer

203

202 — Feature amount calculator

Feature amount distributor

Decryptor — 204

206 — Communicator

# FIG. 4

300

Data processing device

301 — Distributed prediction model storage

Prediction processor — 302

303 — Communicator

## FIG. 5

$$\gamma : \begin{bmatrix} -8.09 & 4.08 & -6.86 & -1.62 & 0 \end{bmatrix}$$

$$\sigma : \begin{bmatrix} 5.83 & 1.41 & -8.32 & 0.89 & 1.74 \end{bmatrix}$$

$$\varepsilon : \begin{bmatrix} 3.89 \end{bmatrix}$$

$$\beta : \begin{bmatrix} -6.12 & -0.42 & 7.8 & 4.55 & -6.43 \end{bmatrix}$$

$$\mu : \begin{bmatrix} 0.59 & 2.97 & -6.8 & -2.83 & -8.36 \end{bmatrix}$$

## FIG. 6

$$y_i = s_i x_i + t_i \qquad \cdots \text{Equation (A)}$$

$$s_i = \frac{\gamma_i}{\sqrt{\sigma_i^2 + \varepsilon}} \qquad \cdots \text{Equation (B)}$$

$$t_i = \beta_i - \frac{\gamma_i \mu_i}{\sqrt{\sigma_i^2 + \varepsilon}} \qquad \cdots \text{Equation (C)}$$

$$y'_i = \frac{y_i}{s_i} = x_i + \frac{t_i}{s_i} \qquad \cdots \text{Equation (D)}$$

## FIG. 7

$$s_i' = \left[ s_i * q_i \right] \qquad \cdots \quad \text{Equation (E)}$$

$$t_i' = \left[ t_i * q_i \right] \qquad \cdots \quad \text{Equation (F)}$$

$$k_i = \begin{cases} u, & \text{if } {}^\forall x_i, \ s_i x_i + t_i \geq 0 \\ -u - 1, & \text{if } {}^\forall x_i, \ s_i x_i + t_i < 0 \\ \left| \dfrac{t_i}{s_i} \right|, & \text{if } s_i > 0 \\ \left| \dfrac{t_i}{s_i} \right| + \dfrac{p-1}{2}, & \text{if } s_i < 0 \end{cases} \qquad \cdots \quad \text{Equation (G)}$$

## FIG. 8

$$y_i = \begin{cases} 1 & \text{if } (x_i + k_i) \geq 0 \\ -1 & \text{if } (x_i + k_i) < 0 \end{cases}$$

## FIG. 9

$$y_i = s'_i x_i + t'_i$$

## FIG. 10A

$$\begin{array}{l} s : \begin{bmatrix} -1.314 & 1.683 & -0.802 & -0.749 & 0 \end{bmatrix} \\ t : \begin{bmatrix} -5.344 & -5.435 & 2.344 & 2.431 & -6.43 \end{bmatrix} \end{array}$$

## FIG. 10B

$$\begin{array}{l} s' : \begin{bmatrix} -13 & 16 & -8 & -7 & 0 \end{bmatrix} \\ t' : \begin{bmatrix} -54 & -54 & 23 & 24 & -64 \end{bmatrix} \\ k : \begin{bmatrix} 32770 & -3 & 32768 & 10000 \end{bmatrix} \end{array}$$

## FIG. 10C

$$\begin{array}{l} s' : \begin{bmatrix} 65506 & 16 & 65511 & 65512 & 0 \end{bmatrix} \\ t' : \begin{bmatrix} 65466 & 65465 & 23 & 24 & 65467 \end{bmatrix} \\ k : \begin{bmatrix} 32770 & 65528 & 32768 & 32768 & 10000 \end{bmatrix} \end{array}$$

## FIG. 11

| Username | Feature amount 1 | Feature amount 2 | Feature amount 3 |
|---|---|---|---|
| AAA | 12 | 345 | 6 |

## FIG. 12

| Destination | Feature amount 1 | Feature amount 2 | Feature amount 3 |
|---|---|---|---|
| Data processing device 300 | 38 | 448 | 62 |
| Data processing device 310 | 64 | 551 | 118 |
| Data processing device 320 | 90 | 654 | 174 |

## FIG. 13

Matrix product operation | Homogenization + nonlinear processing | Matrix product operation | Homogenization + nonlinear processing | Matrix product operation | Homogenization processing | Maximum value search

First layer | Second layer | Third layer

## FIG. 14

$$\begin{bmatrix} -1 & 1 & 1 & -1 \\ 1 & 1 & -1 & -1 \\ 1 & 1 & -1 & 1 \end{bmatrix}$$

# FIG. 15

Start

Convert prediction model by converting at least one parameter for performing homogenization processing included in prediction model into at least one parameter for performing processing including nonlinear processing — S001

Encrypt converted prediction model to generate encrypted prediction model in which prediction processing is performed while maintaining secrecy of input in secret state — S002

End

## FIG. 16A

| User terminal device 200 | | Data processing device 300 | Data processing device 310 | Data processing device 320 | | Data providing device 100 |

- S101 Create prediction model through training processing
- S102 Apply conversion processing to prediction model
- S103 Distribute prediction model
- S104 Distributed prediction model
- S105 Store distributed prediction model

400

EP 3 910 615 B1

# FIG. 16B

EP 3 910 615 B1

## FIG. 16C

400

| User terminal device 200 | Data processing device 300 | Data processing device 310 | Data processing device 320 | | Data providing device 100 |

Distributed prediction result  S206

Decrypt prediction result  S207

Utilize prediction result  S208

400

| User terminal device 200 | | Data processing device 300 | Data processing device 310 | Data processing device 320 | | Data providing device 100 |

| Start predetermined number of repetitions | S2051 |

| Matrix product operation | S2052 |

| Homogenization + nonlinear processing | S2053 |

| End predetermined number of repetitions | S2054 |

| Matrix product operation | S2055 |

| Homogenization processing | S2056 |

| Maximum value search | S2057 |

EP 3 910 615 B1

42

# FIG. 17

400

| User terminal device 200 | Data processing device 300 | Data processing device 310 | Data processing device 320 | Data providing device 100 |

| Start predetermined number of repetitions | — S301 |
| Convolution | — S302 |
| Homogenization + nonlinear processing | — S303 |
| Convolution | — S304 |
| Pooling | — S305 |
| Homogenization + nonlinear processing | — S306 |
| End predetermined number of repetitions | — S307 |
| Matrix product operation | — S308 |
| Homogenization processing | — S309 |
| Maximum value search | — S310 |

EP 3 910 615 B1

FIG. 18

Max Pooling

Average Pooling

Sum Pooling

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PAYMAN MOHASSEL et al.** SecureML: A System for Scalable Privacy-Preserving Machine Learning. *IEEE Symposium on Security and Privacy,* 2017, https://eprint.iacr.org/2017/396.pdf
- **RAN GILAD-BACHRACH et al.** *CryptoNets: Applying Neural Networks to Encrypted Data with High Throughput and Accuracy, http://proceedings.mlr.press/v48/gilad-bachrach16.pdf*
- **HIROMASA KITAI et al.** *MOBIUS: Model-Oblivious Binarized Neural Networks, https://arxiv.org/abs/1811.12028*
- XNOR-POP: A processing-in-memory architecture for binary Convolutional Neural Networks in Wide-IO2 DRAMs. **JIANG LEI et al.** 2017 IEEE/ACM INTERNATIONAL SYMPOSIUM ON LOW POWER ELECTRONICS AND DESIGN (ISLPED). IEEE
- **KITAI et al.** *MOBIUS: Model-Oblivious Binarized Neural Networks*
- **MATTHIEU COURBARIAUX et al.** *Binarized Neural Networks: Training Deep Neural Networks with Weights and Activations Constrained to +1 or -1, https://arxiv.org/abs/1602.02830*
- **RONALD CRAMER et al.** *Share Conversion, Pseudorandom Secret-Sharing and Applications to Secure Computation, https://rd.springer.com/chapter/10.1007/978-3-540-30576-7_19*
- Multiparty Computation for Interval, Equality, and Comparison Without Bit-Decomposition Protocol. **TAKAHASHI NISHIDE et al.** Public Key Cryptography. Springer, 2007